(19) Europäisches Patentamt
European Patent Office
Office européen des brevets

(11) **EP 0 571 779 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(51) Int Cl.⁷: $G06F\ 9/44$, $G06F\ 15/18$

(21) Anmeldenummer: **93107027.0**

(22) Anmeldetag: **30.04.1993**

(54) **Adaptive Computersystem**

Adaptive computersystem

Système d'ordinateur adaptatif

(84) Benannte Vertragsstaaten:
**DE FR GB**

(30) Priorität: **26.05.1992 DE 4217314**

(43) Veröffentlichungstag der Anmeldung:
**01.12.1993 Patentblatt 1993/48**

(73) Patentinhaber: **AMMON, Kurt**
**21365 Adendorf (DE)**

(72) Erfinder: **AMMON, Kurt**
**21365 Adendorf (DE)**

(56) Entgegenhaltungen:
**EP-A- 0 483 359        GB-A- 2 218 834**

- **A.M. LISTER 'Fundamentals of operating systems' 1975 , MACMILLAN PRESS , LONDON, UK Par. 8.5 Scheduling Algorithms, Par. 8.6 Process Hierarchies, Seite 102 - Seite 109**
- **IEEE EXPERT Bd. 5, Nr. 2, April 1990, NEW YORK US Seite 15-28 , XP140453 PI-SHEN DENG ET AL. 'A skill refinement learning model for rule-based expert systems'**
- **PROC. OF THE 4TH INT. CONF. ON GENETIC ALGORITHMS 13. Juni 1991, MORGAN KAUFMAN, SAN MATEO, CA, USA Seiten 37 - 44 , XP260094 JOHN R. KOZA 'Evolving a computer program to generate random numbers using the genetic programming paradigm'**
- **PROC. 1988 AMERICAN CONTROL CONF. 15. Juni 1988, IEEE, NEW YORK, NY, USA Seiten 221 - 226 , XP92579 GRANTHAM K. H. PANG 'a blackboard control architecture for real-time control'**

**Beschreibung**

TECHNISCHES GEBIET

Die Erfindung gehört in das Gebiet der "Künstlichen Intelligenz", die ein Teilgebiet der Informatik ist. Sie betrifft ein Computersystem mit einem Speicher zur Speicherung von Programmen einschließlich Wissen, das seine Programme durch steuernde Regulationen an Eingabesignale adaptiert und auf der Grundlage der adaptierten Programme Ausgabesignale generiert. Die Eingabesignale können zum Beispiel von Tastaturen oder Sensoren erzeugt werden und die Ausgabesignale Drucker, Sichtgeräte oder die Bewegungen von Robotern steuern.

STAND DER TECHNIK

Die Leistungen von Systemen der "Künstlichen Intelligenz" sind im Vergleich zu den Fähigkeiten "menschlicher Intelligenz" noch recht bescheiden. Dies soll an Hand des Gebiets des Theorembeweisens erläutert werden.

Das Gebiet des Theorembeweisens hat das Ziel, Computersysteme, sogenannte Theorembeweiser, zu entwickeln, die automatisch Beweise mathematischer Lehrsätze generieren. Nach mehr als 30-jähriger Forschung und Entwicklung sind die Leistungen von Theorembeweisern im Vergleich zu den Fähigkeiten von Mathematikern trivial (vgl. Bundy, A., *The Computer Modelling of Mathematical Reasoning,* San Diego, Calif.: Academic Press, 1983, S. 10). Ein sehr bekanntes Problem im Gebiet des Theorembeweisens ist SAM's Lemma. Der Markgraf Karl Theorembeweiser ist eines der größten Projekte in der Geschichte des Theorembeweisens (vgl. Bläsius, K., Eisinger, N., Siekmann, J., Smolka, G., Herold, A., und Walther, C., The Markgraf Karl Refutation Procedure, *Proceedings of the Seventh International Joint Conference on Artificial Intelligence,* August 1981, Vancouver, Kanada). Nach etwa 15-jähriger Entwicklungszeit geben Ohlbach und Siekmann SAM's Lemma als einzigen schwierigeren Satz an, das der Markgraf Karl Theorembeweiser bewiesen hat (Ohlbach, H. J., und Siekmann, J., The Markgraf Karl Refutation Procedure, University of Kaiserslautern, Department of Computer Science, SEKI Report SR-89-19, 1989). Vom Standpunkt eines Mathematikers aus betrachtet ist ein Beweis von SAM's Lemma jedoch recht trivial, da der Beweis aus acht Gleichungen besteht, von denen sieben die rechte Seite der ersten Gleichung vereinfachen (vgl. Ammon, K., The automatic acquisition of proof methods, *Proceedings of the Seventh National Conference on Artificial Intelligence,* August 21-26, 1988, St. Paul, USA).

Das wohl bekannteste Verfahren im Gebiet des Theorembeweisens ist das Resolutionsverfahren. Der Theorembeweiser OTTER 2.2, der von vielen Fachleuten als der leistungsfähigste Resolutionsbeweiser angesehen wird, kann auch SAM's Lemma beweisen (McCune, W. W., OTTER 2.0 Users Guide, Report ANL-90/9, Argonne National Laboratory, Argonne, Illinois, 1990, und McCune, W. W., What's new in OTTER 2.2. Report ANL/MCS-TM-153, Argonne National Laboratory, Argonne, Illinois, 1991). Doch der Markgraf Karl Beweiser und OTTER 2.2 erfüllen beim Beweis von SAM's Lemma nicht die wichtige Minimalanfordeung, daß ein Theorembeweiser wenigstens alle Axiome verarbeiten soll. Zum Beispiel fehlt in den Axiomen für SAM's Lemma die Abgeschlossenheit der Verbandsoperationen, d. h. die Existenz eines Minimums und eines Maximums für jeweils zwei Elemente eines Verbandes (vgl. McCharen, J. D., Overbeek, R. A., und Wos, L. A., Problems and experiments for and with automated theorem-proving programs, *IEEE Transactions on Computers,* Vol. C-25, No. 8, pp. 773-782). Werden diese elementarsten Axiome mit eingegeben, bricht der Beweiser OTTER 2.2 in einer kombinatorischen Explosion zusammen. Dies bedeutet, daß OTTER 2.2 gar nicht in der Lage ist, SAM's Lemma zu beweisen, weil der Beweis durch die manuelle Auswahl der Axiome weitgehend vorgegeben ist. Für den Markgraf Karl Beweiser ist ein Beweis von SAM's Lemma sogar noch schwieriger als für OTTER 2.2.

Herkömmliche Theorembeweiser wie der Markgraf Karl Beweiser und OTTER 2.2 müssen durch sogenannte Optionen manuell gesteuert werden (vgl. McCune, W. W., OTTER 2.0 Users Guide, Report ANL-90/9, Argonne National Laboratory, Argonne, Illinois, 1990). Da diese Theorembeweiser umfangreiche Programmsysteme sind, die eine Fülle von komplexen Verfahren enthalten und leistungsfähige Rechner erfordern, ist die manuelle Steuerung durch Optionen äußerst schwierig. Diese Schwierigkeit wird noch dadurch erhöht, daß sich die Verfahren in diesen Theorembeweisern sehr von den menschlichen Denkweisen unterscheiden, d. h. den Benutzern dieser Theorembeweiser. Weiterhin ist es erforderlich, manuell Probleme in eine für diese Theorembeweiser geeignete Form zu übersetzen. Zum Beispiel ist für den Beweis von SAM's Lemma eine Übersetzung der Verbandsoperationen in Minimum- und Maximumrelationen erforderlich. Eine solche manuelle Übersetzung eines Satzes kann unter Umständen schwieriger sein als ein manueller Beweis des Satzes. Außerdem ist im voraus nicht bekannt, in welche Darstellung ein Satz übersetzt werden muß, damit ein Beweiser einen Beweis findet. Weiterhin produzieren herkömmliche Beweiser unlesbare Beweise, die in mühsamer Handarbeit in eine lesbare Form zurückübersetzt werden müssen.

Herkömmlicher Theorembeweiser sind in keiner Weise in der Lage, die zentralen Ideen signifikanter Sätze der höheren Mathematik, zum Beispiel des Gödelschen Unvollständigkeitssatzes, zu generieren. Selbst wenn diese Ideen vorgegeben sind, brechen sie nach wenigen einfachen Schritten in einer kombinatorischen Explosion zusammen, da sie nicht alle Definitionen und Lemmas verarbeiten können, die zum Beweis signifikanter Sätze erforderlich sind (vgl. Bledsoe, W. W., Non-resolution theorem proving, *Artificial Intelligence*, Vol. 9, 1977, S. 27). Neuere Wege zur Entwicklung von Theorembeweisern, zum Beispiel die Technologie der Expertensysteme, wurden bisher kaum verfolgt oder führten zu keinen besseren Ergebnissen. Somit bleiben die Leistungen herkömmlicher Theorembeweiser auf triviale Randbereiche der Mathematik beschränkt.

Eine wesentliche Eigenschaft herkömmlicher Theorembeweiser besteht darin, daß sie auf eine Vielzahl von komplexen und umfangreichen Verfahren basieren, die sich nicht an neue und schwer vorhersehbare Probleme und Situationen adaptieren können. Daher produzieren diese Beweiser viele nutzlose Schritte und brechen schließlich in einer kombinatorischen Explosion zusammen, da sie keine neuen Wege einschlagen können, falls ein ausgewählter Weg nicht zum Ziel führt.

Die oben beschriebenen Probleme und Leistungsgrenzen sind nicht auf das Gebiet des Theorembeweisens beschränkt. Sie gelten vielmehr auch für Systeme in anderen Gebieten der "Künstlichen Intelligenz", zum Beispiel der Bild- und Sprachverarbeitung und der Robotik.

DARSTELLUNG DER ERFINDUNG

Der Erfindung liegt die Aufgabe zugrunde, ein benutzerfreundliches, wirtschaftliches und leistungsfähiges Computersystem mit einem Speicher zur Speicherung von Programmen und Wissen zu schaffen, das auch in Bereichen eingesetzt werden kann, die eine Bewältigung von neuen und schwer vorhersehbaren Situationen erfordern.

Diese Aufgabe wird erfindungsmäßig durch das im folgenden beschriebene Computersystem gelöst. Es verarbeitet mit Hilfe der Programme und des Wissens in seinem Speicher Eingabesignale und erzeugt als endgültiges Ergebnis Ausgabesignale, wobei die Eingabe- und Ausgabesignale Informationen repräsentieren. Es heißt adaptiv, da es seine Programme und seine Wissen an neue schwer vorhersehbare Situationen anpassen kann. Ein adaptives Computersystem enthält Steuerungskomponenten und Ausführungskomponenten. Die Steuerungskomponenten steuern die Ausführungskomponenten in Regulationen. Dabei werden in Regulationen Ausführungskomponenten, die eine Aufgabe nicht lösen, Betriebsmittel entzogen. Der Entzug von Betriebsmitteln kann auf verschiedene Art erfolgen, zum Beispiel kann er vollständig, teilweise oder zeitweise erfolgen. Der Entzug von Betriebsmitteln kann auch dadurch erfolgen, daß eine Ausführungskomponente von sich aus ohne Ergebnis terminiert. Ein wichtiger Vorteil adaptiver Computersysteme besteht darin, daß sie durch Regulationen Ausführungskomponenten auswählen können, die für die Lösung einer Aufgabe geeignet sind. Dabei wird die Anwendung von Ausführungskomponenten, die für die Lösung einer Aufgabe nicht nützlich sind, weitgehend vermieden. Das hat zur Folge, daß adaptive Computersysteme sozusagen einen maßgeschneiderten Satz von effizienten Ausführungskomponenten für die Lösung einer Aufgabe zusammenstellen und organisieren.

Ein adaptives Computersystem kann sich durch Regulationen an neue und unvorhersehbare Situationen anpassen, d. h. Siutationen, die im voraus nicht vollständig und und in allen Einzelheiten beschrieben werden können. Es kann in Regulationen Variationen von Ausführungskomponenten erzeugen und diese dann aktivieren. Es ist besonders effizient, wenn es in Regulationen zuerst Ausführungskomponenten aktiviert, die einfach sind oder wenig Betriebsmittel erfordern. Diese Effizienz ist besonders groß, wenn zuerst Ausführungskomponenten aktiviert werden, die beide Eigenschaften besitzen, d. h., die sowohl einfach sind als auch wenig Betriebsmittel erfordern. Diese Art der Aktivierung von Ausführungskomponenten hat den Vorteil, daß ein adaptives Computersystem gleichzeitig effizient und allgemein sein kann. Diese Effizienz kommt dadurch zustande, daß einfache Ausführungskomponenten oder Ausführungskomponenten, die wenig Betriebsmittel erfordern, zuerst aktiviert werden. Die Allgemeinheit wird dadurch erreicht, daß danach allgemeinere Ausführungskomponente aktiviert werden. Ein weiterer Vorteil dieser Art der Aktivierung von Ausführungskomponenten besteht darin, daß Steuerungs- und Ausführungskomponenten eine einfache Struktur besitzen können und das Computersystem somit leicht benutzbar ist. Ein adaptives Computersystem kann Mittel für die Lösung von Aufgaben durch Komposition von elementaren Begriffen generieren. Es kann Steuerungskomponenten enthalten, die das Ziel, eine Aufgabe zu lösen, auf das Teilziel zurückführen, eine oder mehrere andere Aufgabe zu lösen. Eine Steuerungskomponente eines adaptiven Computersystems kann in einer Regulation mehrere Steuerungskomponenten steuern, die in Regulationen weitere Steuerungskomponenten oder eine Ausführungskomponenten steuern. Dies hat ebenfalls den Vorteil, daß Steuerungs- und Ausführungskomponenten eine einfache Struktur besitzen können und das Computersystem auf diese Weise leicht benutzbar ist. Ein adaptives Computersystem kann das für die Lösung einer Aufgabe erforderliche Wissen aus einer Wissensbasis auswählen. Dies hat den Vorteil, daß ein solches Computersystem auch große Mengen von Wissen effizient verarbeiten kann und Wissen nicht verwendet, das für die Lösung einer Aufgabe nicht von Nutzen ist. Ein adaptives Computersystem kann in einer Regulation einer Ausführungskomponente, die Zwischenergebnisse liefert, mehr Betriebsmittel zuteilen. Dadurch erhöht sich seine Effizienz, da dadurch Ausführungskomponenten, die für die Lösung einer Aufgabe weniger nützlich sind, weniger Betriebsmittel verbrauchen. Ein adaptives Computersystem kann eine Steuerungskomponente enthalten, die in mehreren Regulationen, die eine zyklischen Struktur besitzen, von einer Steuerungskomponente aktiviert wird, deren Aktivierung sie selbst veranlaßt hat.

KURZE BESCHREIBUNG DER ZEICHNUNGEN

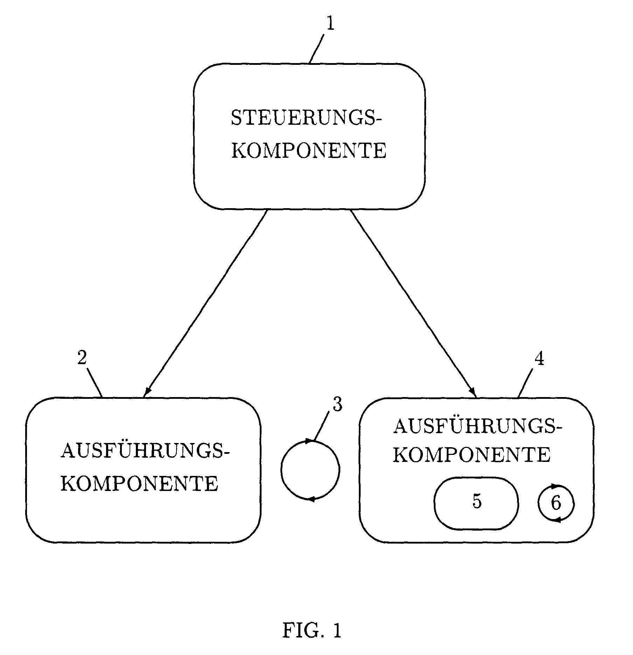

Figur 1 zeigt die Zusammenwirkung einer Steuerungskomponente und mehrerer Ausführungskomponenten in einem adaptiven Computersystem durch Regulationen.

BESTER WEG ZUR AUSFÜHRUNG DER ERFINDUNG

Im folgenden wird eine genaue Beschreibung der besten Ausführungsform der Erfindung gegeben. Selbstverständlich ist damit nicht beabsichtigt, die Erfindung auf diese Form zu beschränken, sondern die folgende Beschreibung soll vielmehr alle Modifikationen und Variationen der Erfindung abdecken, die gemäß den Ansprüchen dem Wesen der Erfindung entsprechen.

Ein adaptives Computersystem enthält Steuerungskomponenten und Ausführungskomponenten. Die Steuerungskomponenten steuern die Ausführungskomponenten in Regulationen. Figur 1 zeigt die Zusammenwirkung einer Steuerungskomponente 1 und mehrerer Ausführungskomponenten 2, 4 und 5 in einem adaptiven Computersystem durch Regulationen 3 und 6. Die Steuerungskomponente aktiviert eine Ausführungskomponente 1, um ein Ziel zu erreichen. Liefert die Ausführungskomponente 1 kein Ergebnis, so aktiviert sie in einer Regulation 3 eine weitere Ausführungskomponente 5. Liefert auch die Ausführungskomponente 5 kein Ergebnis, so wird in einer Regulation 6 eine weitere Ausführungskomponente 4 aktiviert. Die Ausführungskomponente 4 kann eine Variation der Ausführungskomponente 5 sein, die allgemeiner als die Ausführungskomponente 5 ist. Liefert auch die Ausführungskomponente 4 kein Ergebnis, wird in einer Regulation eine weitere Ausführungskomponente aufgerufen, zum Beispiel in der Regulation 3 eine Variation der Ausführungskomponente 2.

Im folgenden wird ein adaptives Computersystem beschrieben, dessen Steuerungs- und Ausführungskomponenten recht einfache Verfahren zum Beweis mathematischer Lehrsätze sind. Das Gebiet der Mathematik wurde gewählt, da es eine kompakte Veranschaulichung eines einfachen und leistungsfähigen adaptiven Computersystems ermöglicht. Zuerst werden die Verfahren zum Beweis mathematischer Lehrsätze beschrieben. Ihre Arbeitsweise wird dann an Hand von drei Beispielen erläutert, die zeigen, daß adaptive Computersysteme in der Lage sind lesbare Beweise sehr bedeutender Lehrsätze der höheren Mathematik zu entdecken. Das erste Beispiel beschreibt einen maschinellen Beweis eines einfachen Satzes aus der mathematischen Logik. Beim Beweis dieses Satzes wird automatisch ein berühmtes mathematisches Verfahren wiederentdeckt, nämlich Cantors Diagonalverfahren. Das zweite Beispiel beschreibt einen maschinellen Beweis von Gödels Unvollständigkeitssatz, der als epochale Entdeckung und Krönung der mathematischen Logik angesehen wird. Da bei diesem zweiten Beispiel ebenfalls Cantors Diagonalverfahren wiederentdeckt wird, zeigt das Beispiel insgesamt, daß adaptive Computersysteme in der Lage sind, die herausragende Leistungen verschiedener Generationen von Mathematikern und epochale Entdeckungen in einem einzigen Schritt hervorzubringen. Das dritte Beispiel beschreibt einen maschinellen Beweis eines bedeutenden Satzes der höheren Analysis. Der Satz besagt, daß jede stetige Funktion auf einer kompakten Menge reeller Zahlen gleichmäßig stetig ist. Der Beweis dieses Satzes ist komplexer als die Beweise in den beiden vorangehenden Beispielen.

In den drei Beispielen werden häufig die Begriffe "Instanz" und "Unifikation" aus dem Gebiet der "Künstlichen Intelligenz" benutzt. Sie werden nun kurz erläutert. Sei $f(x_1, x_2, ...x_n)$ ein Ausdruck mit freien Variablen $x_1, x_2, ...x_n$. Die Anwendung einer Substitution $a_1/x_1, a_2/x_2, ..., a_n/x_n$ für die Variablen $x_1, x_2, ...x_n$ auf den Ausdruck $f(x_1, x_2, ...x_n)$ ergibt eine *Instanz* $f(a_1, a_2, ...a_n)$ dieses Ausdrucks. Umgekehrt liefert die *Unifikation* des Ausdrucks $f(x_1, x_2, ...x_n)$ mit einem Ausdruck $f(a_1, a_2, ...a_n)$ eine Substitution $a_1/x_1, a_2/x_2, ..., a_n/x_n$ für die Variablen $x_1, x_2, ...x_n$.

Die Steuerungs- und Ausführungskomponenten des im folgenden beschriebenen adaptiven Computersystems sind Verfahren zum Beweis mathematischer Lehrsätze. Die Eingabe eines Verfahrens ist ein *Ziel,* das eine Restriktion, zum Beispiel eine Zeitgrenze enthalten kann, und ein *Teilbeweis,* der aus einer Liste von Beweisschritten besteht. Eine *Beweisschritt* enthält eine Aussage oder eine Annahme und eine Begründung, die die Verfahren, Definitionen, Lemmas und vorherigen Beweisschritte angibt, die verwendet wurden, um die Aussage abzuleiten oder die Annahme zu erzeugen. Die Verfahren erzeugen weitere Beweisschritte und Teilziele. Außer dem Ziel, eine Aussage zu beweisen, verfolgen einige Verfahren das Ziel

$$beweise\ x : P(x_1, x_2, ..., x_n), \qquad (1)$$

eine Aussage $P(x_1, x_2, ..., x_n)$ mit freien Variablen $x_1, x_2, ..., x_n$ zu beweisen, d. h. sie konstruieren $x_1, x_2, ...x_n$, so daß $P(x_1, x_2, ..., x_n)$ gilt.

Das *Beweisverfahren* ruft zuerst das Suchverfahren auf, das prüft, ob eine zu beweisende Aussage bereits bewiesen wurde. Falls dies nicht zutrifft, bestimmt das Beweisverfahren den Typ der Aussage, d. h. es prüft, ob die Aussage eine Elementrelation, eine All- oder Existenzaussage, eine Konjunktion, eine Implikation, eine Negation oder eine Ungleichung ist, und ruft ein spezielles Verfahren auf, das Aussagen dieses Typs beweist. Falls das spezielle Verfahren versagt, ruft das Beweisverfahren das Reduktionsverfahren und das Ersetzungsverfahren auf. Das Beweisverfahren beweist auch Aussagen $P(x_1, x_2, ..., x_n)$ mit freien Variablen $x_1, x_2, ..., x_n$, d. h. es konstruiert $x_1, x_2, ..., x_n$, so daß $P(x_1, x_2, ..., x_n)$ gilt.

Das *Suchverfahren* prüft, ob eine zu beweisende Aussage in einem vorherigen Beweisschritt enthalten ist oder gleich einem Lemma oder Satz ist. Das Verfahren prüft auch, ob eine vorgegebene Aussage $P(x_1, x_2, ..., x_n)$ mit den freien Variablen $x_1, x_2, ..., x_n$ mit einer Aussage in einem vorherigen Beweisschritt, einem Lemma oder einem Satz unifiziert werden kann.

Das *Elementverfahren* beweist Elementrelationen $x \in S$. Es sucht nach einer Teilmengenrelation $T \subseteq S$ in einem vorherigen Beweisschritt. Mit Hilfe dieser Teilmengenrelation führt es das Ziel, eine Elementrelation $x \in S$ zu beweisen, auf das Teilziel zurück, die Elementrelation $x \in T$ zu beweisen. Die Anwendung der Teilmengenrelation $T \subseteq S$ auf $x \in T$ ergibt dann die Elementrelation $x \in S$, die zu beweisen war. Außerdem sucht es in vorherigen Beweisschritten nach einer Funktion $f$ von einer Menge $T$ in die Menge $S$. Mit Hilfe der Funktion $f$ führt es das Ziel, eine Elementrelation $x \in S$ zu beweisen, auf das Teilziel zurück, die Elementrelation $x \in T$ zu beweisen. Die Anwendung der Funktion $f$ auf $x \in T$ ergibt dann die Elementrelation $x \in S$, die zu beweisen war. Das Elementverfahren verarbeitet auch das Ziel, Aussagen der Form $x \in S$ zu beweisen, wobei $x$ eine freie Variable ist. Mit Hilfe einer Teilmengenrelation $T \subseteq S$ oder einer Funktion $f$ von einer Menge $T$ in die Menge $S$ führt es dieses Ziel auf das Teilziel zurück, eine Aussage der Form $x \in T$ mit der freien Variablen $x$ zu beweisen.

Das *Allverfahren* beweist Allaussagen, deren Skopus eine Implikation enthält, d. h. eine Allaussage der Form $\forall x_1, x_2, ..., x_n(P(x_1, x_2, ..., x_n) \rightarrow Q(x_1, x_2, ..., x_n))$. Es führt die Annahme ein, daß $P(x_1, x_2, ..., x_n)$ gilt, und ruft das Beweisverfahren auf, $Q(x_1, x_2, ..., x_n)$ zu beweisen. Daraus folgt dann die Allaussage, die zu beweisen war.

Das *Existenzverfahren* beweist Existenzaussagen $\exists x(x \in S \wedge P(x))$. Zuerst sucht es nach Elementen $a \in S$ im Beweis und ruft das Beweisverfahren auf, $P(a)$ innerhalb einer Zeitgrenze zu beweisen. Die Anwendung der Inferenzregel der $\exists$-Einführung auf die Konjunktion $a \in S \wedge P(a)$ liefert dann die Existenzaussage, die zu beweisen war.

Falls ein Element $a \in S$ nicht gefunden oder $P(a)$ nicht bewiesen werden kann, ruft das Existenzverfahren das Begriffsverfahren auf, das in vorherigen Beweisschritten vorkommende Begriffe in eine Form transformiert, die von den anderen Verfahren verarbeitet werden kann. Dann führt es die Annahme $x \in S$ ein und ruft das Beweisverfahren auf, $P(x)$ zu beweisen. Sobald ein anderes Verfahren das Teilziel erzeugt, eine Gleichung oder Ungleichung $R(x)$, die die Variable $x$ enthält, zu beweisen, wird die Gleichung und Ungleichung $R(x)$ als Eigenschaft von $x$ betrachtet und die Annahme eingeführt, daß $R(x)$ gilt. Sobald ein Beweis von $P(x)$ zustande gekommen ist, konstruiert das Existenzverfahren aus der Eigenschaft $R(x)$ ein $x \in S$ aufgrund von einfachen Regeln. Ein Beispiel für eine solche Regel ist: Falls $R(x)$ besagt, daß $x$ kleiner als eine endliche Menge von Zahlen ist, dann definiere $x$ als das Minimum dieser Menge von Zahlen. Dann beweist das Verfahren die Gleichung oder Ungleichung $R(x)$ aufgrund der Definition von $x \in S$. Abschließend wendet es die Regel der $\exists$-Einführung auf die Konjunktion $x \in S \wedge P(x)$ an. Dies liefert die Existenzaussage, die zu beweisen war.

Das Existenzverfahren beweist auch Existenzaussagen, die besagen, daß eine Formel oder ein Prädikat $x$ mit einer gegebenen Eigenschaft $P(x)$ existiert. Zu diesem Zweck ruft das Existenzverfahren das Kompositionsverfahren auf, das Beispiele für solche Formeln oder Prädikate konstruiert. Dann ruft es für jede Formeln oder jedes Prädikat $x$ das Beweisverfahren auf, die Eigenschaft $P(x)$ innerhalb einer Zeitgrenze zu beweisen. Die Zeitgrenze wird verdoppelt, wenn der Beweis von $P(x)$ für alle Beispiele $x$ von Formeln oder Prädikaten versagt. Gelingt der Beweis, so folgt gemäß der Inferenzregel der $\exists$-Einführung, daß eine Formel oder ein Prädikat $x$ mit der Eigenschaft $P(x)$ existiert, was zu beweisen war. Werden vom Kompositionsverfahren kurze und lange Formeln oder Prädikate $x$ erzeugt, versucht das Existenzverfahren die Eigenschaft $P(x)$ zuerst für kurze Formeln oder Prädikate zu beweisen.

Das *Begriffsverfahren* sucht nach Namen von mathematischen Begriffen, die in vorherigen Beweisschritten vorkommen und wendet die Definitionen dieser Begriffe auf den Teilbeweis an. Dann ruft es das Skolem- und das Mengenverfahren auf, die Allaussagen im Teilbeweis in eine Form transformieren, die von den anderen Verfahren verarbeitet werden kann.

Das *Skolemverfahren* transformiert Allaussagen, deren Konklusionen Existenzaussagen enthalten, dadurch, daß es die Existenzquantoren in die Konklusionen durch Funktionen ersetzt, d. h. es skolemisiert die Existenzquantoren.

Das *Mengenverfahren* konstruiert Teilmengen einer Menge und Familien von Teilmengen einer Menge. Falls die Prämisse einer Allaussage eine Teilmenge einer Menge oder eine Familie von Teilmengen einer Menge enthält, konstruiert das Mengenverfahren Beispiele für solche Teilmengen oder Familien von Teilmengen und wendet die Allaussage auf die Teilmenge oder Familie von Teilmengen an. Die dadurch entstehenden neuen Aussage werden dann vom Umschreibungsverfahren in eine explizitere Form transformiert. Um eine Teilmenge einer Menge $S$ zu konstruieren, sucht das Mengenverfahren nach einem Prädikat $P(x)$ mit einer freien Variablen $x$ in einem vorherigen Beweisschritt und verwendet $P(x)$, um eine Menge $\{x : x \in S \land P(x)\}$ zu definieren, die genau die Elemente von $x \in S$ enthält, für die $P(x)$ gilt. Um eine Familie von Teilmengen einer Menge $S$ zu definieren, sucht es nach einem Prädikat $P(a, x)$ mit zwei freien Variablen $a$ und $x$ in einem vorherigen Beweisschritt und verwendet eine Variable, zum Beispiel $a$, als Index einer Familie von Mengen $\{x : x \in S \land P(a, x)\}$. Falls ein Prädikat $P(a, x, y)$ eine zusätzliche freie Variable $y$ enthält, wird sie durch eine neue Funktion $f(a)$ ersetzt. Dies liefert eine Familie von Mengen $\{x : x \in S \land P(a, x, f(a))\}$. Die Funktion $f$ wird nachträglich definiert, zum Beispiel durch das Existenzverfahren.

Falls das Mengenverfahren für die Konstruktion einer Teilmenge einer Menge $S$ ein geeignetes Prädikat $P(x)$ nicht finden kann, ruft es das Kompositionsverfahren auf, das ein Prädikat $P(x)$ aus elementaren Funktionen konstruiert. Mit dem Prädikat $P(x)$ wird dann eine Menge $\{x : x \in S \land P(x)\}$ definiert.

Das *Kompositionsverfahren* konstruiert Formeln und Aussagen, indem es Regeln für die Bildung von Formeln und Aussagen auf den Teilbeweis anwendet. Vereinfacht gesagt geben die Regeln die Definitions- und Wertebereiche von elementaren Funktionen an, die die elementaren Komponenten der neuen Formeln und Aussagen bilden. Die Anwendung der Regeln ergibt Kompositionen der elementaren Funktionen. Einige dieser Kompositionen sind Formeln oder Aussagen. Das Kompositionverfahren beendet die Konstruktion von Formeln und Aussagen, sobald eine bestimmte Anzahl von Formeln und Aussagen erzeugt ist oder eine Zeitgrenze überschritten wird. Beispiele für Regeln die Bildung von Formeln und Aussagen sind:

> **Regel 1** Ist $T$ eine Teilmenge von $S$ und $x$ ein Element von $S$, dann ist $x \in T$ eine Aussage. Eine Formalisierung dieser Regel ist: $\forall T, S, x(T \subseteq S \land x \in S \to Aussage(x \in T))$
>
> **Regel 2** Ist $A$ eine Aussage, dann ist auch die Negation $\neg A$ von $A$ eine Aussage. Eine Formalisierung dieser Regel ist: $\forall A(Aussage(A) \to Aussage(\neg A))$

Die Anwendung der ersten Regel auf die Aussagen $T \subseteq S$ und $x \in S$ in einem Teilbeweis ergibt, daß $x \in T$ eine Aussage ist. Die Anwendung der zweiten Regel auf die Aussage $x \in T$ ergibt, daß $\neg x \in T$ eine Aussage ist.

Analog zur Konstruktion von Aussagen, konstruiert das Kompositionsverfahren auch Prädikate, um Teilmengen von Mengen zu definieren. Um eine Teilmenge einer Menge $S$ zu definieren, führt es eine Variable $x \in S$ ein und wendet Allaussagen in vorherigen Beweisschritten und Regeln für die Bildung von Aussagen auf den Teilbeweis an. Dabei entstehen Aussagen $P(x)$, die die Variable $x \in S$ enthalten, d. h. Prädikate $P(x)$. Mit diesen Prädikaten könnnen dann Teilmengen $\{x : x \in S \land P(x)\}$ von $S$ definiert werden, die genau die Elemente $x \in S$ enthalten, für die $P(x)$ gilt. Zum Beispiel ergibt die Anwendung der Regeln 1 und 2 auf die Teilmengenrelation $T \subseteq S$ in einem vorherigen Beweisschritt und die Variable $x \in S$ die Prädikate $x \in T$ und $\neg x \in T$. Das Prädikat $\neg x \in T$ definiert die Teilmenge $\{x : x \in S \land \neg x \in T\}$ von $S$, d. h. das Komplement von $T$ in $S$.

Das *Umschreibungsverfahren* transfomiert Aussagen in eine explizitere Form. Es sucht nach Termen $s$ in einer Aussage $P(s)$, die bewiesen werden soll, und ruft das Gleichungsverfahren auf, eine Gleichung der Form $s = t$ zu beweisen, wobei $t$ einen Term bezeichnet, der konstruiert werden soll. Dann ersetzt es den Term $s$ in der Aussage $P(s)$ durch $t$. Dies ergibt eine Aussage $P(t)$, die den Term $t$ enthält.

Das Umschreibungsverfahren sucht auch nach indizierten Termen $s_i$, wobei $i$ ein Element einer Indexmenge $I$ ist, in einer Aussage $P(s_i)$ und ruft das Gleichungsverfahren auf, eine Gleichung der Form

$$\forall i(i \in I \to s_i = t_i) \tag{2}$$

zu beweisen, wobei $t_i$ eine indizierte Familie von Termen ist, die konstruiert werden soll. Dann ersetzt es die Familie $s_i$ in der Aussage $P(s_i)$ durch $t_i$. Dies ergibt eine Aussage $P(t_i)$, die die Familie $t_i$ enthält.

Das *Gleichungsverfahren* beweist Gleichungen $s = t$, deren linke Seite $s$ vorgebenen ist und deren rechte Seite $t$ konstruiert wird. Es sucht nach einer Allaussage in einem vorherigen Beweisschritt, einer Definition oder einem Lemma, deren Konklusion eine Gleichung enthält, und unifiziert eine Seite dieser Gleichung mit der vorgegebenen linken Seite $s$ der Gleichung $s = t$, die bewiesen werden soll. Die Unifikation liefert eine Substitution, die auf die Prämisse der Allaussage angewandt wird. Dann wird das Beweisverfahren aufgerufen, die sich ergebende Instanz der Prämisse zu beweisen. Die Anwendung der Allaussage auf diese Instanz ergibt dann die Gleichung, die bewiesen werden soll.

Das Gleichungsverfahren beweist auch Allaussagen

$$\forall i(i \in I \to s_i = t_i), \tag{3}$$

deren Konklusion $s_i = t_i$ eine indizierte Familie von Termen $s_i$ und $t_i$ enthält, wobei $i$ ein Element einer Indexmenge $I$ ist. Die Familie $s_i$ von Termen in der linken Seite der Gleichungen $s_i = t_i$ ist vorgegeben und die Familie $t_i$ wird konstruiert.

Das Verfahren sucht nach einer Allaussage in einem vorherigen Beweisschritt, einer Definition oder einem Lemma, deren Konklusion eine Gleichung enthält, und unifiziert eine Seite dieser Gleichung mit der vorgegebenen linken Seite $s_i$ der Gleichung $s_i = t_i$ in der Allaussage (3), die bewiesen werden soll. Die Unifikation liefert eine Substitution, die auf die Prämisse der Allaussage angewandt wird. Dann wird das Beweisverfahren aufgerufen, die sich ergebende Instanz der Prämisse zu beweisen. Die Anwendung der Allaussage auf diese Instanz ergibt dann eine Allaussage (3), die bewiesen werden soll.

Das *Konjunktionsverfahren* beweist Konjunktionen $A \wedge B$, indem es das Beweisverfahren aufruft, $A$ und $B$ zu beweisen. Daraus folgt dann die Konjunktion $A \wedge B$, die zu beweisen war.

Das *Implikationsverfahren* beweist Implikationen $A \rightarrow B$. Es führt die Annahme ein, daß die Prämisse $A$ gilt, und ruft das Beweisverfahren auf, die Konklusion $B$ zu beweisen. Daraus folgt dann die Implikation, die zu beweisen war.

Das *Negationsverfahren* beweist Negationen. Es ruft zuerst das Reduktionsverfahren innerhalb einer Zeitgrenze auf. Falls das Reduktionsverfahren versagt, wird das Widerspruchsverfahren aufgerufen.

Das *Reduktionsverfahren* sucht nach einer Allaussage in einem vorherigen Beweisschritt, einer Definition oder einem Lemma, deren Konklusion mit einer Aussage, die bewiesen werden soll, unifiziert werden kann. Die Unifikation liefert eine Substitution, die auf die Prämisse der Allaussage angewandt wird. Dann wird Beweisverfahren aufgerufen, die sich ergebende Instanz der Prämisse zu beweisen. Die Anwendung der Allaussage auf diese Prämisse ergibt dann die Aussage, die zu beweisen war. Zum Beispiel kann die Konklusion $Q(x_1, x_2, ...x_n)$ in der Allaussage

$$\forall x_1, x_2, ...x_n(P(x_1, x_2, ...x_n) \rightarrow Q(x_1, x_2, ...x_n)) \tag{4}$$

mit einer Aussage $Q(a_1, a_2, ...a_n)$, die bewiesen werden soll, unifiziert werden. Die Anwendung der Allaussage auf die Instanz $P(a_1, a_2, ...a_n)$ der Prämisse ergibt dann die Aussage $Q(a_1, a_2, ...a_n)$, die bewiesen werden soll.

Der Skopus der Allaussage (4) enthält eine einzige Implikation. Das Reduktionsverfahren transformiert Allaussagen, die nicht die Form (4) haben, in Allaussagen dieser Form. Zum Beispiel werden Allaussagen der Form

$$\forall x(P(x) \rightarrow (Q(x) \leftrightarrow R(x))) \tag{5}$$

in Allaussagen $\forall x(P(x) \wedge Q(x) \rightarrow R(x))$ und $\forall x(P(x) \wedge R(x) \rightarrow Q(x))$ transformiert und dann wie die Allaussage (4) verarbeitet, d. h. mit der Allaussage (4) wird das Ziel, eine Aussage $R(a)$ zu beweisen, auf das Teilziel zurückgeführt, die Konjunktion $P(a) \wedge Q(a)$ zu beweisen, und das Ziel, eine Aussage $Q(a)$ zu beweisen, wird auf das Teilziel zurückgeführt, die Konjunktion $P(a) \wedge R(a)$ zu beweisen.

Das Reduktionsverfahren beweist auch Aussagen $Q(x_1, x_2, ...x_n)$ mit freien Variablen $x_1, x_2, ...x_n$, d. h. es konstruiert $x_1, x_2, ...x_n$, so daß $Q(x_1, x_2, ...x_n)$ gilt. Zum Beispiel führt es mit Hilfe einer Allaussage (4) das Ziel, $Q(x_1, x_2, ...x_n)$ zu beweisen, auf das Teilziel zurück, eine Aussage $P(x_1, x_2, ...x_n)$ mit freien Variablen $x_1, x_2, ...x_n$ zu beweisen, d. h. $x_1, x_2, ...x_n$ zu konstruieren, so daß $P(x_1, x_2, ...x_n)$ gilt.

Das *Widerspruchsverfahren* verwendet die Methode des Beweises durch Widerspruch, um die Negation einer Aussage zu beweisen. Zuerst wendet es Allaussagen in vorherigen Beweisschritten, Definitionen oder Lemmas auf den Teilbeweis an. Es führt die Annahme ein, daß die Aussage gilt, deren Negation bewiesen werden soll. Falls die Prämisse einer Allaussage in einem vorhergehenden Beweisschritt eine Teilmenge einer Menge enthält, ruft es das Mengenverfahren auf, das Beispiele solcher Teilmengen konstruiert. Dann ruft es für jedes Beispiel einer Teilmenge das Vorwärtsverfahren und das Fallverfahren innnerhalb einer Zeitgrenze, zum Beispiel einer Minute, auf. Die Zeitgrenze wird verdoppelt, falls beide Verfahren für alle Beispiele von Teilmengen versagen. Es wird ständig geprüft, ob bei der Anwendung des Vorwärtsverfahrens und des Fallverfahrens ein Widerspruch entsteht. Aus einem Widerspruch folgt dann die Negation, die zu beweisen war.

Das *Vorwärtsverfahren* wendet wiederholt Allaussagen in vorherigen Beweisschritten, Definitionen und Lemmas auf den Teilbeweis an. Zum Beispiel ergibt die Anwendung einer Allaussage

$$\forall x_1, x_2, ..., x_n(P(x_1, x_2, ..., x_n) \rightarrow Q(x_1, x_2, ..., x_n)) \tag{6}$$

auf eine Aussage $P(a_1, a_2, ..., a_n)$ im Teilbeweis die Aussage $Q(a_1, a_2, ..., a_n)$.

Der Skopus der Allaussage (6) enthält eine einzige Implikation. Das Vorwärtsverfahren transformiert Allaussagen, die nicht die Form (6) haben, in Allaussagen dieser Form. Zum Beispiel werden Allaussagen der Form

$$\forall x(P(x) \rightarrow (Q(x) \leftrightarrow R(x))) \tag{7}$$

in Allaussagen $\forall x(P(x) \wedge Q(x) \rightarrow R(x))$ und $\forall x(P(x) \wedge R(x) \rightarrow Q(x))$ transformiert und dann wie die Allaussage (6) verarbeitet, d. h. die Anwendung der Allaussage (7) auf die Aussagen $P(a)$ und $Q(a)$ in vorherigen Beweisschritten ergibt die Aussage $R(a)$ und die Anwendung der Allaussage (7) auf die Aussagen $P(a)$ und $R(a)$ in vorherigen Beweisschritten ergibt die Aussage $Q(a)$.

Enthält eine Allaussage eine Äquivalenz $A \leftrightarrow B$, so erzeugt das Vorwärtsverfahren eine neue Allaussage, indem es die Äquivalenz $A \leftrightarrow B$ durch die Äquivalenz $\neg A \leftrightarrow \neg B$ ersetzt. Die neue Allaussage wird dann in einfachere Allaussagen der Form 6 transfomiert. Zum Beispiel entsteht so aus der Allaussage (7) die Allaussage

$$\forall x(P(x) \rightarrow (\neg Q(x) \leftrightarrow \neg R(x))), \tag{8}$$

die in die einfacheren Allaussagen $\forall x(P(x) \wedge \neg Q(x) \rightarrow \neg R(x))$ und $\forall x(P(x) \wedge \neg R(x) \rightarrow \neg Q(x))$ transformiert wird. Diese einfacheren Aussagen werden wie die Allaussage (6) verwendet.

Analog zu Allaussagen mit einer Variablen, die mehrere Implikationen enthalten, verarbeitet das Vorwärtsverfahren auch Allaussagen, die mehrere Variable und mehrere Implikationen enthalten. Solche Allaussagen werden in einfachere Allaussagen der Form (6) transformiert, die nur eine Implikationen enthalten, und dann wie diese einfacheren Allaussagen verwendet. Zum Beispiel transformiert das Vorwärtsverfahren Allaussagen der Form

$$\forall x(P(x) \rightarrow \forall y(Q(x, y) \leftrightarrow R(x, y))) \tag{9}$$

in Allaussagen $\forall x, y(P(x) \wedge Q(x,y) \rightarrow R(x, y))$ und $\forall x, y(P(x) \wedge R(x, y) \rightarrow Q(x,y))$ und verarbeitet sie wie die Allaussage (6). Anstelle der Variablen $x$ und $y$ in (9) können auch mehrere Variable $x_1, x_2, ...,x_n$ und $y_1, y_2, ...,y_n$ stehen.

Falls die Prämisse $P(x_1, x_2, ..., x_n)$ einer Allaussage (6) eine Existenzaussage ist, versucht das Vorwärtsverfahren die Inferenzregel der $\exists$-Einführung an auf eine Aussage im Teilbeweis anzuwenden, um eine solche Existenzaussage zu erzeugen. Falls zum Beispiel die Prämisse $P(x_1, x_2, ..., x_n)$ in 6 die Form $\exists y R(x_1, x_2, ..., x_n, y)$ hat, ergibt die Anwendung die Inferenzregel der $\exists$-Einführung auf eine Aussage $R(a_1,a_2, ..., a_n,b)$ in einem vorherigen Beweisschritt die Existenzaussage $\exists y R(a_1, a_2, ..., a_n, y)$, d. h. $P(a_1,a_2, ..., a_n)$. Die Anwendung der Allaussage 6 auf diese Existenzaussage ergibt dann die Aussage $Q(a_1,a_2, ..., a_n)$.

Das *Fallverfahren* ruft zuerst das Kompositionsverfahren auf, das mit Hilfe von Regeln Aussagen erzeugt. Entstehen dabei Negationen von Aussagen, werden diese gelöscht. Das Fallverfahren führt für jede Aussage die Annahme ein, daß diese Aussage gilt, und ruft das Vorwärtsverfahren innerhalb einer Zeitgrenze, zum Beispiel einer Minute, auf. Falls das Vorwärtsverfahren für alle Aussagen versagt, wird die Zeitgrenze verdoppelt. Es wird ständig geprüft, ob bei der Anwendung des Vorwärtsverfahrens ein Widerspruch entsteht. Aus einem Widerspruch folgt, daß die Negation der Annahme gilt, die vom Fallverfahren eingeführt wurde. Danach wird erneut das Vorwärtsverfahren aufgerufen.

Die *Ungleichungsverfahren* beweist Ungleichungen, indem es das Reduktions-, das Transitivitäts-, das Dreiecks- und das Ersetzungsverfahren innerhalb von Zeitgrenzen aufruft. Das Reduktionsverfahren, das auch vom Beweis- und vom Negationsverfahren aufgerufen wird, wurde bereits beschrieben.

Das *Transivitätsverfahren* verwendet die Transitivität der Ungleichheitsrelation, d. h., daß für alle reelle Zahlen $x$, $y$ und $z$ aus den Relationen $x < y$ und $y < z$ die Relation $x < z$ folgt. Falls $x < z$ eine Ungleichung ist, die bewiesen werden soll, sucht das Verfahren in vorherigen Beweisschritten nach einer Ungleichung der Form $x < y$, wobei $y$ einen Term bezeichnet, und ruft das Beweisverfahren auf, die Ungleichung $y \leq z$ zu beweisen. Die Anwendung der Transitivität der Ungleichheitsrelation auf $x < y$ und $y \leq z$ liefert dann die Ungleichung $x < z$, die zu beweisen war.

Das *Dreiecksverfahren* benutzt die Dreiecksungleichung, um eine Ungleichung zu beweisen. Die Dreiecksungleichung besagt, daß $|x - z| \leq |x - y| + |y - z|$ für alle reellen Zahlen $x$, $y$ und $z$ gilt. Falls $|x - z| < a$ eine Ungleichung ist, die bewiesen werden soll, ruft das Dreiecksverfahren das Beweisverfahren auf, eine Aussage der Form $y \in \mathbf{R}$ mit einer freien Variable $y$ zu beweisen, d. h. eine reelle Zahl $y$ zu konstruieren. Dann ruft es das Beweisverfahren auf, die Ungleichungen $|x - y| < a/2$ und $|y - z| < a/2$ zu beweisen. Die Anwendung der Dreiecksungleichung auf diese Ungleichungen ergibt dann die Ungleichung $|x - z| < a$, die zu beweisen war.

Das *Ersetzungsverfahren* verändert die Darstellung einer Aussage, die bewiesen werden soll, und ruft das Beweisverfahren auf, die veränderte Aussage zu beweisen. Es sucht nach Termen $s$ in einer Aussage $P(s)$, die bewiesen werden soll, und ruft das bereits beschriebene Gleichungsverfahren auf, eine Gleichung der Form $s = t$ zu beweisen, wobei $t$ einen Term bezeichnet, der konstruiert werden soll. Dann ersetzt es den Term $s$ in der Aussage $P(s)$ durch $t$ und ruft das Beweisverfahren auf, die sich ergebende Aussage $P(t)$ zu beweisen. Wegen $s = t$ folgt aus $P$

*(t)* die Aussage *P(s),* die zu beweisen war.

Das *Vereinfachungsverfahren* vereinfacht Aussagen in Beweisschritten und Aussagen in Teilzielen, die bewiesen werden sollen. Es wird aufgerufen, wenn ein neuer Beweisschritt oder ein neues Teilziel erzeugt wird. Beispiele für Vereinfachungen sind:

- Enthält eine Aussage den Term |0|, d. h. den Betrag von 0, so wird dieser Term durch 0 ersetzt.
- Enthält eine Aussage einen Term $x$ - $x$, so wird dieser Term durch 0 ersetzt.
- Besitzt eine Aussage die Form $a \in \{x : P(x)\}$, so wird diese Aussage durch $P(a)$ ersetzt.
- Enthält eine Aussage eine Vereinigung $\cup_{A \in f(s)} A$ von Mengen *A,* so wird diese durch eine Vereinigung $\cup_{x \in S} f(x)$ von Mengen $f(x)$ ersetzt.

Kann eine Aussage in einem Beweisschritt oder einem Teilziel vereinfacht werden, erzeugt das Verfahren einen neuen Beweischritt oder ein neues Teilziel, das die vereinfachte Aussage enthält.

Das *Auswahlverfahren* wählt Lemmas und Definitionen, die für eine Beweisaufgabe nützlich sind, aus einer Wissensbasis aus. Dazu verwaltet es eine Liste von Namen mathematischer Begriffe, die am Anfang leer ist. Sobald ein neuer Beweisschritt oder ein neues Teilziel erzeugt wird, prüft das Auswahlverfahren, ob der Beweisschritt oder das Teilziel Namen von Begriffen enthält, die in der Liste nicht enthalten sind und fügt diese Namen zur Liste hinzu. Enthalten Definitionen von Begriffen, die in der Liste vorkommen, Namen von Begriffen, die in der Liste nicht vorkommen, werden diese Namen ebenfalls zur Liste hinzugefügt. Die anderen Verfahren, zum Beispiel das Vorwärts- und das Reduktionsverfahren, verwenden nur Definitionen und Lemmas, die ausschließlich Begriffe enthalten, die in der Liste vorkommen.

Erzeugt ein Verfahren, zum Beispiel das Skolem-, das Mengen-, das Vorwärts-, das Gleichungsoder das Widerspruchsverfahren eine Existenzaussage $\exists x_1, x_2, ..., x_n P(x_1, x_2, ..., x_n)$, so wendet es die Inferenzregel der $\exists$-Elimination an. Dies ergibt eine Aussage $P(x_1, x_2, ..., x_n)$.

Das Computersystem enthält auch Variationen der oben beschriebenen Verfahren, die sich aus diesen Verfahren oder den im folgenden beschriebenen Beispielen in naheliegender Weise ergeben.

Zuerst wird die automatische Generierung eines einfachen Satzes aus der mathematischen Logik durch ein adaptives Computersystem beschrieben. Beim Beweis dieses Satzes wird ein berühmtes Verfahren aus der mathematischen Logik, nämlich Cantors Diagonalverfahren, wiederentdeckt (vgl. Kleene, S. C., *Introduction to Metamathematics*. Amsterdam: North-Holland, 1952, S. 6). Auf diese Veröffentlichung wird im folgenden wiederholt Bezug genommen. Der Satz erfordert die folgende Definition:

> **Definition 3** Zwei Mengen *A* und *B* sind *gleich,* in Zeichen $A = B$, wenn sie dieselben Elemente enthalten. Eine Formalisierung dieser Definition ist: $\forall A, B(A = B \leftrightarrow \forall x(x \in A \leftrightarrow x \in B))$

Der Satz ist:

> **Satz 4** Die Menge der Mengen natürlicher Zahlen nicht abzählbar ist, d. h. es gibt keine Funktion *f* auf der Menge **N** der natürlichen Zahlen in die Menge der Mengen natürlicher Zahlen derart, daß es für alle Mengen *S* natürlicher Zahlen eine natürliche Zahl $n \in$ **N** mit $S = f(n)$ gibt. Eine Formalisierung dieses Satzes ist:

$$\neg \exists f(Funktion(f, \mathrm{N}) \wedge \forall n(n \in \mathrm{N} \rightarrow f(n) \subseteq \mathrm{N}) \wedge \forall S(S \subseteq \mathrm{N} \rightarrow \exists n(n \in \mathrm{N} \wedge S = f(n))))$$

Zuerst wird der Beweis des Satzes 4 in gewöhnlicher Darstellung angegeben. Dann wird beschrieben, wie er vom Computersystem erzeugt wird.

Der Beweis des Satzes 4 in gewöhnlicher Darstellung ist: Wir nehmen an, daß die Menge der Mengen natürlicher Zahlen abzählbar ist, und leiten einen Widerspruch ab. Daraus folgt dann der Satz. Diese Annahme bedeutet, daß es eine Funktion *f* auf der Menge **N** der natürlichen Zahlen in die Menge der Mengen natürlicher Zahlen gibt derart, daß es für alle Mengen *S* natürlicher Zahlen eine natürliche Zahl $n \in$ **N** gibt mit $S = f(n)$, d. h. die Mengen *S* und $f(n)$ enthalten dieselben Elemente. Gemäß Cantors Diagonalverfahren definieren wir eine neue Menge *S* natürlicher Zahlen dadurch, daß eine natürliche Zahl $n \in$ **N** genau dann in *S* enthalten ist, wenn *n* nicht in der Menge $f(n)$ enthalten ist. Aufgrund unserer Annahme gibt es zu der Menge *S* eine natürliche Zahl $n \in$ **N**, so daß $S = f(n)$ gilt. Angenommen, *n* ist ein Element von *S*. Gemäß der Definition der Menge *S* ist dann *n* nicht in der Menge $f(n)$ enthalten. Dies ergibt wegen $S = f(n)$ einen Widerspruch. Somit ist unsere Annahme falsch, d. h. *n* ist nicht in *S* enthalten. Wegen $S = f(n)$ folgt daraus, daß *n* nicht in $f(n)$ enthalten ist. Gemäß der Definition der Menge *S* ergibt sich aber, daß *n* in *S* enthalten ist. Dies bedeutet einen Widerspruch, da wir bereits bewiesen haben, daß *n* nicht in *S* enthalten ist. Somit haben wir aus der ursprünglichen Annahme, daß die Menge der Mengen natürlicher Zahlen abzählbar ist, einen Widerspruch abgeleitet. Daraus folgt, daß die Menge der Mengen natürlicher Zahlen nicht abzählbar ist, was zu beweisen war.

Tabelle 1 enthält einen maschinellen Beweis von Satz 4, der vom Widerspruchs-, Mengen-, Kompositions-, Fall- und Vorwärtsverfahren in etwa sechs Minuten auf einem einfachen Personalcomputer hervorgebracht wird. Dieser Beweis entspricht dem oben beschriebenen Beweis von Satz 4 in gewöhnlicher Darstellung. Der Beweis in Tabelle 1 besteht aus zwölf Beweisschritten. Jeder Beweisschritt besteht aus einer Nummer, einer Aussage oder einer Annahme und einer Begründung, die die Verfahren, Definitionen, Lemmas und vorherigen Beweisschritte angibt, die verwendet wurden, die Aussage abzuleiten oder die Annahme zu erzeugen. Zum Beispiel wird Beweisschritt 1 vom Widerspruchsverfahren erzeugt, Beweisschritt 4 vom Mengenverfahren unter Verwendung der Beweisschritte 2 und 3 und Beweisschritt 8 ebenfalls vom Vorwärtsverfahren unter Verwendung von Definition 3 und der Beweisschritte 5 und 6.

Der Beweis in Tabelle 1 wird wie folgt generiert: Zuerst ruft das Beweisverfahren das Suchverfahren auf, das versagt, da der Teilbeweis am Anfang keinen Beweisschritt enthält und Satz 4 nicht gleich der Definition 3 ist. Dann stellt das Beweisverfahren fest, daß Satz 4 eine Negation ist, und ruft daher das Negationsverfahren auf. Das Negationsverfahren ruft zuerst das Reduktionsverfahren auf, das versagt, da der Teilbeweis keinen Beweisschritt enthält und Satz 4 nicht mit Definition 3 auf eine einfachere Beweisaufgabe zurückgeführt werden kann. Daher ruft das Negationsverfahren das Widerspruchsverfahren auf, das in Beweisschritt 1 die Annahme einführt, daß die Aussage gilt, deren Negation bewiesen werden soll, d. h., daß es eine Funktion $f$ auf der Menge **N** der natürlichen

Tabelle 1:

| Ein Beweis für die Nichtabzählbarkeit der Mengen der Mengen natürlicher Zahlen | | |
|---|---|---|
| 1. | *Annahme:* $\exists f\ Funktion(f,\mathbf{N}) \wedge$ $\forall n(n \in \mathbf{N} \rightarrow f(n) \subseteq \mathbf{N}) \wedge$ $\forall S(S \subseteq \mathbf{N} \rightarrow \exists n(n \in \mathbf{N} \wedge S = f(n)))$ | Widerspruchsverfahren |
| 2. | *Funktion*$(f, \mathbf{N}) \wedge \forall n(n \in \mathbf{N} \rightarrow f(n) \subseteq \mathbf{N}) \wedge$ $\forall S(S \subseteq \mathbf{N} \rightarrow \exists n(n \in \mathbf{N} \wedge S = f(n)))$ | Widerspruchsverfahren: 1 |
| 3. | $S \subseteq \mathbf{N} \wedge \forall n(n \in \mathbf{N} \rightarrow (n \in S \leftrightarrow \neg n \in f(n)))$ | Kompositionsverfahren |
| 4. | $\exists n(n \in \mathbf{N} \wedge S = f(n))$ | Mengenverfahren: 2, 3 |
| 5. | $n \in \mathbf{N} \wedge S = f(n)$ | Mengenverfahren: 4 |
| 6. | *Annahme:* $n \in S$ | Fallverfahren |
| 7. | $\neg n \in f(n)$ | Vorwärtsverfahren: 3, 5, 6 |
| 8. | $n \in f(n)$ | Vorwärtsverfahren: D. 3; 5, 6 |
| 9. | $\neg n \in S$ | Fallverfahren: 6, 7, 8 (Widerspruch) |
| 10. | $\neg n \in f(n)$ | Vorwärtsverfahren: D. 3; 5, 9 |
| 11. | $n \in S$ | Vorwärtsverfahren: 3, 5, 10 |
| 12. | $\neg \exists f(Funktion(f, \mathbf{N}) \wedge \forall n(n \in \mathbf{N} \rightarrow f(n) \subseteq \mathbf{N}) \wedge$ $\forall S(S \subseteq \mathbf{N} \rightarrow \exists n(n \in \mathbf{N} \wedge S = f(n))))$ | Widerspruchsverfahren: 1, 9, 11 |

Zahlen in die Menge der Mengen natürlicher Zahlen gibt derart, daß es für alle Mengen $S$ natürlicher Zahlen eine natürliche Zahl $n \in \mathbf{N}$ mit $S = f(n)$ gibt. Die Anwendung der Regel der $\exists$-Elimination auf die Existenzaussage in Beweisschritt 1 ergibt dann Beweisschritt 2.

Da die Prämisse $S \subseteq \mathbf{N}$ in der zweiten Allaussage in Beweisschritt 2 eine Teilmenge $S$ einer Menge **N** enthält, ruft das Widerspruchsverfahren das Mengenverfahren auf, das Beispiele für Teilmengen $S \subseteq \mathbf{N}$ konstruiert. Da in den Beweisschritten 1 und 2 kein geeignetes Prädikat für die Definition einer Teilmenge $S \subseteq \mathbf{N}$ vorhanden ist, ruft das Mengenverfahren das Kompositionsverfahren auf, das Prädikate konstruiert, die Teilmengen $S \subseteq \mathbf{N}$ definieren. Dazu führt das Kompositionsverfahren eine Variable $n \in \mathbf{N}$ ein. Dies ergibt den zweiten Schritt in Tabelle 2. Dann wendet es Aussagen im Teilbeweis und die Regeln 1 und 2 an. Dies ergibt die Beweisschritte 4, 5 und 6 in Tabelle 2. Das Kompositionsverfahren verwendet die Aussagen $n \in f(n)$ und $\neg n \in f(n)$ in den Schritten 5 und 6, die die Variable $n$ enthalten, als Prädikate, um Teilmengen $S \subseteq \mathbf{N}$ zu definieren. Das Prädikat $n \in f(n)$ ergibt eine Teilmenge $S \subseteq \mathbf{N}$, die die Elemente $n \in \mathbf{N}$ enthält, für die $n \in f(n)$ gilt. Das Prädikat $\neg n \in f(n)$ ergibt eine Teilmenge $S \subseteq \mathbf{N}$, die die Elemente $n \in \mathbf{N}$ enthält, für die $\neg n \in f(n)$ gilt. Beweisschritt 3 in Tabelle 1 enthält eine Formalisierung dieser Definition der Teilmenge $S \subseteq \mathbf{N}$. Das Kompositionsverfahren gibt nun die Kontrolle an das Mengenverfahren zurück, das die zweite Allaussage in Beweisschritt 2 auf die vom Kompositionsverfahren definierten Mengen anwendet. Für die Menge in Beweisschritt 3 in Tabelle 1 ergibt dies den Beweisschritt 4. Das Mengenverfahren wendet dann die Regel der $\exists$-Eli-mination auf die Existenzaussage in Beweisschritt 4 an. Dies ergibt

Tabelle 2:

| | | Die Konstruktion von Prädikaten durch das Kompositionsverfahren | |
|---|---|---|---|
| | 1. | *Annahme:* $\exists f$ *Funktion* $(f, \mathbf{N}) \wedge$ $\forall n(n \in \mathbf{N} \rightarrow f(n) \subseteq \mathbf{N}) \wedge$ $\forall S(S \subseteq \mathbf{N} \rightarrow \exists n(n \in \mathbf{N} \wedge S = f(n)))$ | Widerspruchsverfahren |
| | 2. | *Funktion*$(f, \mathbf{N}) \wedge \forall n(n \in \mathbf{N} \rightarrow f(n) \subseteq \mathbf{N}) \wedge$ $\forall S(S \subseteq \mathbf{N} \rightarrow \exists n(n \in \mathbf{N} \wedge S = f(n)))$ | Widerspruchsverfahren: 1 |
| | 3. | *Annahme:* $n \in \mathbf{N}$ | Kompositionsverfahren |
| | 4. | $f(n) \subseteq \mathbf{N}$ | Kompositionsverfahren: 2, 3 |
| | 5. | *Aussage*$(n \in f(n))$ | Kompositionsverfahren: R. 1; 3, 4 |
| | 6. | *Aussage*$(\neg n \in f(n))$ | Kompositionsverfahren: R. 3; 5 |

Beweisschritt 5.

Das Mengenverfahren gibt nun die Kontrolle an das Widerspruchsverfahren zurück, das das Vorwärts- und das Fallverfahren innerhalb einer Zeitgrenze, zum Beispiel eine Minute, aufruft. Die Zeitgrenze wird verdoppelt, falls beide Verfahren für alle Beispiele von Teilmengen versagen. Da das Vorwärts- und das Fallverfahren nach einer Minute versagen, d. h. kein Widerspruch gefunden wird, wird die Zeitgrenze auf zwei Minuten verdoppelt. Da das Vorwärtsverfahren nach zwei Minuten wiederum versagt, wird das Fallverfahren mit einer Zeitgrenze von zwei Minuten aufgerufen. Das Fallverfahren ruft zuerst das Kompositionsverfahren auf, das Aussagen konstruiert, indem es die Regeln 1 und 2 auf die Beweisschritte 1-5 in Tabelle 1 anwendet. Durch Anwendung der Regel 1 auf die Aussagen $S \subseteq \mathbf{N}$ und $n \in \mathbf{N}$ in den Beweisschritten 3 und 5 in Tabelle 1 entsteht die Aussage $n \in S$. Das Fallverfahren führt dann die Annahme in Beweisschritt 6 in Tabelle 1 ein, daß die Aussage $n \in S$ gilt, und ruft das Vorwärtsverfahren auf. Das Vorwärtsverfahren erzeugt den Beweisschritt 7, indem es die Allaussage in Beweisschritt 3 auf die Aussagen $n \in \mathbf{N}$ und $n \in S$ in den Beweisschritten 5 und 6 anwendet und, und den Beweisschritt 8, indem es die Definition 3 auf die Aussagen $n \in S$ und $S = f(n)$ in den Beweisschritten 5 und 6 anwendet. Das Fallverfahren stellt nun fest, daß die Aussagen $\neg n \in f(n)$ und $n \in f(n)$ in den Beweisschritten 7 und 8 einen Widerspruch bedeuten. Es erzeugt daher die Aussage $\neg n \in S$ in Beweisschritt 9, die besagt, daß die ursprüngliche Annahme $n \in S$ in Beweisschritt 6 falsch ist, d. h. ihre Negation $\neg n \in S$ ist wahr. Dann ruft das Fallverfahren erneut das Vorwärtsverfahren auf, das den Beweisschritt 10 erzeugt, indem es die Definition 3 auf die Aussagen $S = f(n)$ und $\neg n \in S$ in den Beweisschritten 5 und 9 anwendet, und den Beweisschritt 11, indem es die Allaussage in Beweisschritt 3 auf die Aussagen $S = f(n)$ und $\neg n \in f(n)$ in den Beweisschritten 5 und 10 anwendet. Das Widerspruchsverfahren stellt nun fest, daß die Aussagen $\neg n \in S$ und $n \in S$ in den Beweisschritten 9 und 11 einen Widerspruch bedeuten. Daher ist die ursprüngliche Annahme in Beweisschritt 1 falsch und ihre Negation wahr, d. h. es gibt keine keine Funktion $f$ auf der Menge $\mathbf{N}$ der natürlichen Zahlen in die Menge der Mengen natürlicher Zahlen derart, daß es für alle Mengen $S$ natürlicher Zahlen eine natürliche Zahl $n \in \mathbf{N}$ mit $S = f(n)$ gibt. Damit ist der Beweis abgeschlossen.

Da die für die Konstrktion der Menge $S$ natürlicher Zahlen in Beweisschritt 3 in Tabelle 1 gewöhnlich Cantors berühmtes Diagonalverfahren erforderlich ist, hat das adaptive Computersystem beim Beweis von Satz 4 automatisch dieses Verfahren wiederentdeckt.

Das zweite Beispiel einer Anwendung eines adaptiven Computersystems ist ein automatischer Beweis von Gödels Unvollständigkeitssatz, der als epochale Entdeckung und Krönung der mathematischen Logik angesehen wird (vgl. Davis, M., *The Undecidable*, New York: Raven Press, 1965, S. 1). Gödels Unvollständigkeitssatz besagt, daß es in jeder formalen Zahlentheorie eine unentscheidbare Formel gibt, d. h. weder diese Formel noch ihre Negation sind in der Zahlentheorie beweisbar. Da beim Beweis dieses Satzes durch das adaptive Computersystem auch Cantors Diagonalverfahren wiederentdeckt wird, zeigt das Beispiel insgesamt, daß adaptive Computersysteme in der Lage sind, die herausragende Leistungen verschiedener Generationen von Mathematikern und epochale Entdeckungen in einem einzigen Schritt hervorzubringen.

Der Beweis von Gödels Satz erfordert eine Objekt und eine Metasprache. Für die Objektsprache werden die üblichen Zeichen verwendet, zum Beispiel $\forall$, $\exists$ und $\neg$. In der Metasprache steht *"alle"* für $\forall$, *"es-gibt"* für $\exists$ und *"nicht"* für $\neg$.

Die Substitution eines Terms $t$ für eine Variable $x$ in einer Formel $F(x)$ ergibt eine Formel F(t) (vgl. Kleene, 1952, S. 78). Für den maschinellen Beweis von Gödels Satz werden zwei Repräsentationen für die Formel $F(t)$ verwendet: die gewöhnliche Repräsentation und der Ausdruck *sub(F, x, t)*. Ein Bespiel: Sei $t$ ein Term, der frei ist für die Variable $x$ in einer Formel $F(x)$. Die Inferenzregel der $\exists$-Einführung impliziert, daß $\exists x F(x)$ beweisbar ist, falls $F(t)$ beweisbar ist (vgl. Kleene, 1952, S. 78). Eine Formalisierung ist:

$$alle \ F, \ x, \ t(beweisbar(sub(F, \ x, \ t)) \rightarrow beweisbar(\exists xF)). \tag{10}$$

Sei A(x, y) eine Formel mit der Eigenschaft, daß A(**k**, **n**) beweisbar ist für zwei Zahlzeichen **k** and **n**, die die natürlichen Zahlen $k$ und $n$ in der formalen Zahlentheorie repräsentieren (vgl. Kleene, 1952, S. 195). Eine unmittelbare Anwendung der Regel der $\exists$-Einführung (10) auf die beweisbare Formel A(**k**,**n**) ist nicht möglich, da der Ausdruck *sub*(*F*,*x*,*t*) in der Prämisse von (10) mit der Formel A(**k**, **n**) nicht unifiziert werden kann. Daher wird diese Formel in die Ausdrücke

$$sub(A(x,n),x,k) \tag{11}$$

und

$$sub(A(k, y), \ y, \ n) \tag{12}$$

übersetzt. Die Unifikation des Ausdrucks *sub*(*F*,*x*,*t*) in (10) mit dem Ausdruck (11) ergibt die Substitution A(x,**n**)/*F*, x/*x* und **k**/*t* und damit die Instanz *beweisbar*($\exists$xA(x,**n**)) der Konklusion von (10). Analog ergibt der Ausdruck (12) die Konklusion $\exists$yA(**k**,y).

In der Formalisierung von Gödels Unvollständigkeitssatz und seinem Beweis steht *num*(*n*) für das Zahlzeichen **n** für eine natürliche Zahl $n$, *Gz*(*F*) für die Gödelzahl einer Formel *F* und *GzB*(*n*, *F*,*T*) bedeutet, daß $n$ die Gödelzahl eines Beweises einer Formel *F* in einer formalen Theorie *T* ist (vgl. Kleene, 1952, S. 206). Gödels Unvollständigkeitssatz erfordert zwei Definitionen.

**Definition 5** Eine formale Theorie heißt *konsistent*, wenn es keine Formel *F* gibt, so daß *F* und $\neg$*F* in der Theorie beweisbar sind (vgl. Kleene, 1952, S. 124). Formalisierung:

$$alle \ T(formale\text{-}Zahlentheorie(T) \rightarrow (konsistent(T) \leftrightarrow$$

$$alle \ F(beweisbar(F,T) \rightarrow nicht(beweisbar(\neg F,T)))))$$

**Definition 6** Eine formale Theorie heißt $\omega$-*konsistent*, falls jede Formel *F*(*x*) folgende Eigenschaft besitzt: Falls *F*(**n**) für alle natürliche Zahlen $n$ beweisbar ist, dann ist $\neg\forall xF(x)$ nicht beweisbar, d. h. $\overline{\vdash \neg\forall xF(x)}$ (vgl. Kleene, 1952, S. 207). Formalisierung:

$$alle \ T(formale\text{-}Zahlentheorie(T) \rightarrow (\omega\text{-}konsistent(T) \leftrightarrow$$

$$alle \ F, \ x(alle \ n(natürliche\text{-}Zahl(n) \rightarrow beweisbar(sub(F, \ x, \ num(n)), \ T)) \rightarrow$$

$$nicht(beweisbar(\neg\forall xF, \ T)))))$$

**Satz 7 (Gödels Unvollständigkeitssatz)** In jeder formalen Zahlentheorie gibt es eine geschlossene Formel *F* derart, daß *F* nicht beweisbar ist, d. h. $\overline{\vdash F}$, falls die Theorie konsistent ist, und $\neg$*F* nicht beweisbar ist, d. h. $\vdash\neg F$, falls die Theorie $\omega$-konsistent ist. Formalisierung:

$$alle \ T(formale\text{-}Zahlentheorie(T) \rightarrow es\text{-}gibt \ F (geschlossene\text{-}Formel \ (F, \ T) \ \&$$

$$(konsistent(T) \rightarrow nicht(beweisbar(F,T))) \ \&$$

$$(\omega\text{-}konsistent(T) \rightarrow nicht(beweisbar(\neg F,T)))))$$

Im Gegensatz zur gewöhnlichen Form von Gödels Satz enthält die hier angegebene Form keine unentscheidbare Formel (vgl. Kleene, 1952, S. 207-208). Somit hatte das adaptive Computersystem die zusätzliche Aufgabe eine solche Formel zu entdecken, die den wesentlichsten Teil der gewöhnlichen Form von Gödels Satz bildet.

Das Computersystem benötigte etwa 16 Stunden, um einen Beweis von Gödels Unvollständigkeitssatz auf einem einafchen Personlacomputer zu erzeugen. Zuerst wird der Beweis in gewöhnlicher Darstellung angegeben.

Dann wird beschrieben, wie er vom Computersystem erzeugt wird. Der Beweis erfordert die Definition eines Prädikats $A(k,n)$ und fünf Lemmas.

**Definition 8** Das Prädikat $A(k,n)$ ist wie folgt definiert: $k$ ist die Gödelzahl einer Formel $F(x)$ und $n$ ist die Gödelzahl eines Beweises von $F(\mathbf{k})$ (vgl. Kleene 1952. S. 206). Formalisierung:

$$alle\ T,\ F,\ n(formale\text{-}Zahlentheorie(T) \rightarrow (A(Gz(F),\ n) \leftrightarrow GzB(n,\ sub(F,\ x,\ num(Gz(F))),T))$$

**Lemma 9** Eine formale Zahlentheorie enthält eine Formel A(x,y), die das Prädikat $A(k,n)$ für die Gödelnummerierung ausdrückt (vgl. Kleene, 1952, S. 207). Dies bedeutet $\vdash$ A($\mathbf{k}$, $\mathbf{n}$), d. h. A($\mathbf{k},\mathbf{n}$) ist beweisbar, wenn $A(x,\ y)$ wahr ist und $\vdash$ ¬A($\mathbf{k}$, $\mathbf{n}$), d. h. ¬A($\mathbf{k}$, $\mathbf{n}$) ist beweisbar, wenn $A(k,\ n)$ falsch ist. Formalisierung:

$$alle\ T,\ k,\ n(formale\text{-}Zahlentheorie(T) \rightarrow$$

$$(A(k,\ n) \rightarrow beweisbar(A(num(k),\ num(n)),T))\ \&$$

$$(nicht(A(k,\ n)) \rightarrow beweisbar\ (\neg A\ (num(k),\ num(n)),T))))$$

**Lemma 10** Eine Formel ist beweisbar, wenn es eine natürliche Zahl gibt, die die Gödelzahl eines Beweises der Formel ist (vgl. Kleene 1952, S. 206). Formalisierung:

$$alle\ T,\ F(formale\text{-}Zahlentheorie(T) \rightarrow (beweisbar(F,T) \leftrightarrow es\text{-}gibt\ n(GzB(n,\ F,T))))$$

**Lemma 11** Eine $\omega$-konsistente formale Theorie ist auch konsistent (vgl. Kleene, 1952, S. 207). Formalisierung: *alle T (formale-Zahlentheorie(T) & ω-konsistent(T) → konsistent(T))* **Lemma 12** Sei $t$ ein Term, der frei für die Variable $x$ in der Formel $F(x)$ ist. Die Regel der $\exists$-Einführung impliziert, daß $\exists x F(x)$ beweisbar ist, falls $F(t)$ beweisbar ist (vgl. Kleene, 1952, S. 99). Formalisierung:

$$alle\ T,\ F,\ x,\ t(formale\text{-}Zahlentheorie(T)\ \&\ beweisbar(sub(F,\ x,\ t)) \rightarrow beweisbar(\exists xF,T))$$

**Lemma 13** Das Existenzzeichen $\exists$ kann durch das Allzeichen $\forall$ und das Negationszeichen $\neg$ ersetzt werden und umgekehrt (vgl. Kleene 1952, S. 162, *83). Formalisierung:

$$alle\ T,F,x(formale\text{-}Zahlentheorie(T) \rightarrow (beweisbar(\exists xF,T) \leftrightarrow beweisbar(\neg\forall x\neg F,\ T)))$$

Der Beweis in gewöhnlicher Darstellung ist: Sei $k$ die Gödelzahl einer Formel B(x), die durch $\forall y \neg A(x,y)$ definiert wird. Wir zeigen, daß die abgeschlossene Formel B($\mathbf{k}$) unentscheidbar ist. Wir nehmen an, daß die Theorie konsistent und $\vdash$ B($\mathbf{k}$), d. h. B($\mathbf{k}$) beweisbar ist, und leiten einen Widerspruch ab. Da B($\mathbf{k}$) beweisbar ist, gibt es eine natürliche Zahl $n$, die die Gödelzahl eines Beweises von B($\mathbf{k}$) ist. Daher gilt $A(k,n)$ gemäß Definition 8. Da A(x,y) das Prädikat $A(k,n)$ ausdrückt, gilt $\vdash$ A($\mathbf{k}$, $\mathbf{n}$), d. h. A($\mathbf{k}$, $\mathbf{n}$) ist beweisbar. Gemäß der Inferenzregel der $\exists$-Einführung (Lemma 12) folgt $\vdash$ $\exists$yA($\mathbf{k}$, y). Dies impliziert $\vdash$ ¬$\forall$y¬A($\mathbf{k}$,y), d. h. $\vdash$ ¬B($\mathbf{k}$), da das Existenzzeichen $\exists$ durch das Allzeichen $\forall$ und das Negationszeichen $\neg$ ersetzt werden kann (Lemma 13). Dies ergibt wegen der Konsistenz der Theorie und $\vdash$ B($\mathbf{k}$) einen Widerspruch. Somit folgt aus der Konsistenz der Theorie $\overline{\vdash B(\mathbf{k})}$, d. h. B($\mathbf{k}$) ist nicht beweisbar. Nun nehmen wir an, daß die Theorie $\omega$-konsistent ist, und beweisen $\overline{\vdash \neg B(\mathbf{k})}$, d. h. ¬B($\mathbf{k}$) ist nicht beweisbar. Da die Theorie $\omega$-konsistent ist, ist sie gemäß Lemma 11 auch konsistent. Daher gilt $\overline{\vdash B(\mathbf{k})}$, d. h. B($\mathbf{k}$) ist nicht beweisbar. Sei $n$ eine natürliche Zahl. Aus der Annahme, daß $A(k,n)$ gilt, folgt $\vdash$ B($\mathbf{k}$), d. h. B($\mathbf{k}$) ist beweisbar. Da dies einen Widerspruch bedeutet, ist $A(k,\ n)$ falsch. Folglich gilt $\vdash$ ¬A($\mathbf{k}$, $\mathbf{n}$), da A(x, y) das Prädikat $A(k,\ n)$ ausdrückt. Somit gilt $\vdash$ ¬A($\mathbf{k},\mathbf{n}$) für alle natürlichen Zahlen $n$. Wegen der $\omega$-Konsistenz ergibt sich daraus $\overline{\vdash \neg\forall y\neg A(\mathbf{k},y)}$, d. h. $\overline{\vdash \neg B(\mathbf{k})}$. Somit folgt aus der $\omega$-Konsistenz der Theorie $\overline{\vdash \neg B(\mathbf{k})}$, d. h. ¬B($\mathbf{k}$) ist nicht beweisbar. Damit ist der Beweis von Gödels Unvollständigkeitssatz abgeschlossen.

Tabelle 3 enthält den maschinell erzeugten Beweis von Gödels Unvollständigkeitssatz, der dem oben angegebenen Beweis in gewöhnlicher Darstellung entspricht. Jeder Beweisschritt besteht aus einer Nummer, einer Aussage oder einer Annahme und einer Begründung, die die Verfahren, Definitionen, Lemmas und vorherigen Beweisschritte angibt, die verwendet wurden, um die Aussage abzuleiten oder die Annahme zu erzeugen. Zum Beispiel wird Beweisschritt 5 vom Widerspruchsverfahren erzeugt, das die Definition 5 auf die Annahme in Beweisschritt 4 anwendet. Beweisschritt 7 wird vom Vorwärtsverfahren erzeugt, das Lemma 10 auf die Annahmen in den Beweisschritten 1 und 6 anwendet. Der zweite Beweisschritt führt einen Namen *k* für die Gödelzahl der Formel ∀y¬A(x,y) ein. Um die Lesbarkeit des Beweises in Tabelle 3 zu verbessern, stehen die Zahlzeichen **k** und **n** für *num*(*k*) and *num*(*n*).

Die Beweisschritte 9, 11, 21 und 27 benutzen die Definitionen 6 und 8 and Lemma 12, die Ausdrücke der Form *sub*(*F, x, t*) enthalten, d. h. sie erfordern die Substitution eines *t* für eine Variable *x* in einer Formel *F*. Wie weiter oben beschrieben wurde, werden Formeln in vorherigen

Tabelle 3:

| Ein maschineller Beweises von Gödels Unvollständigkeitssatz | | |
|---|---|---|
| 1. | *Annahme: formale-Zahlentheorie(T)* | Allverfahren |
| 2. | *Name(k, Gz(∀y¬A(x,y)))* | Kompositionsverfahren |
| 3. | *geschlossene-Formel(∀y¬A(**k**, y), T)* | Kompositionsverfahren |
| 4. | *Annahme: konsistent(T)* | Implikationsverfahren |
| 5. | *alle F(beweisbar(F,T) → nicht(beweisbar(¬F,T)))* | Widerspruchsverfahren: D. 5; 4 |
| 6. | *Annahme: beweisbar(∀y¬A(**k**, y), T)* | Widerspruchsverfahren |
| 7. | *es-gibt n(GzB(n,∀y¬A(**k**,y),T))* | Vorwärtsverfahren: L. 10; 1, 6 |
| 8. | *GzB(n,∀y¬A(**k**,y),T)* | Vorwärtsverfahren: 7 |
| 9. | *A(k, n)* | Vorwärtsverfahren: D. 8; 1, 8 |
| 10. | *beweisbar(A(**k**,**n**),T)* | Vorwärtsverfahren: L. 9; 1, 9 |
| 11. | *beweisbar(∃yA(**k**,y),T)* | Vorwärtsverfahren: L. 12; 1, 10 |
| 12. | *beweisbar(¬∀y¬A(**k**, y),T)* | Vorwärtsverfahren: L. 13; 1, 11 |
| 13. | *nicht(beweisbar(¬∀y¬A(**k**,y), T))* | Vorwärtsverfahren: 5, 6 |
| 14. | *nicht(beweisbar(∀y¬A(**k**,y),T))* | Widerspruchsverfahren: 6, 12, 13 |
| 15. | *konsistent(T) → nicht(beweisbar(∀y-A(**k**,y),T))* | Implikationsverfahren: 4, 14 |
| 16. | *Annahme: ω-konsistent(T)* | Implikationsverfahren |
| 17. | *Annahme: natürliche-Zahl(n)* | Allverfahren |
| 18. | *konsistent(T)* | Widerspruchsverfahren: L. 11; 1, 16 |
| 19. | *nicht(beweisbar(∀y¬A(**k**,y),T))* | Widerspruchsverfahren: 18, 15 |
| 20. | *Annahme: A(k,n)* | Widerspruchsverfahren |
| 21. | *GzB(n,∀y¬A(**k**,y),T)* | Vorwärtsverfahren: D. 8; 1, 20 |
| 22. | *es-gibt n(GzB(n, ∀y¬A(**k**,y),T))* | Vorwärtsverfahren: 21 |
| 23. | *beweisbar(∀y¬A(**k**, y),T)* | Vorwärtsverfahren: L. 10; 1, 22 |
| 24. | *nicht(A(k,n))* | Widerspruchsverfahren: 20, 19, 23 |
| 25. | *beweisbar(¬A(**k**,**n**),T)* | Reduktionsverfahren: L. 9; 1, 24 |
| 26. | *alle n(natürliche-Zahl(n) → beweisbar(¬A(**k**,**n**),T))* | Allverfahren: 17, 25 |
| 27. | *nicht(beweisbar(¬∀y¬A (**k**,y),T))* | Reduktionsverfahren: D. 6; 1, 16, 26 |
| 28. | *ω-konsistent(T) → nicht(beweisbar(¬∀y¬A(**k**,y),T))* | Implikationsverfahren: 16, 27 |
| 29. | *es-gibt F(geschlossene-Formel(F, T) & (konsistent(T) → nicht(beweisbar(F, T))) & (ω-konsistent(T) → nicht(beweisbar(¬F,T))))* | Existenzverfahren: 3, 15, 28 |
| 30. | *alleT(formale-Zahlentheorie(T) → es-gibt F(geschlossene-Formel(F,T) & (konsistent(T) → nicht(beweisbar(F,T))) & (ω-konsistent(T) → nicht(beweisbar(¬F,T)))))* | Allverfahren: 1, 29 |

Beweisschritten auch in eine solche Repräsentation übersetzt, so daß Ausdrücke der Form *sub*(*F*, *x*, *t*) in Definitionen and Lemmas mit diese Formeln unifiziert werden können. Zum Beispiel wird die Formel A(**k**,**n**) in Schritt 10 in den Ausdruck *sub*(A(**k**,y),y,**n**) übersetzt. Die Unifikation des Ausdrucks *sub*(*F*, *x*, *t*) in der Prämisse von Lemma 12 mit diesem Ausdruck ergibt die Substitution A(**k**, y)/*F*, *y*/*x* und **n**/*t* und somit die Instanz *beweisbar*(∃yA(**k**, y),*T*) der Konklusion von Lemma 12 in Beweisschritt 11. In Beweisschritt 27 wird die Substitution *T*/*T*, ¬A(**k**,y)/*F* und y/*x* für die Variablen *T, F,* and *x* in Definition 6 verwendet. In den Beweisschritten 9 und 21 wird die Substitution *T*/*T*, ∀y¬A(x, y)/*F* und *n*/*n* für die Variablen *T, F,* und *n* in Definition 8 verwendet.

Vereinfacht gesagt konstruiert das Kompositionsverfahren mehrere geschlossene Formeln und das Implikationsverfahren beweist, daß eine dieser Formeln nicht beweisbar ist, falls die Theorie konsistent ist, und ihre Negation nicht beweisbar ist, falls die Theorie ω-konsistent ist. Diese Formel ist in den Beweisschritten 2 und 3 enthalten. Der Beweis der ersten Implikation in Beweisschritt 15 wird einfach durch das Widerspruchs- und das Vorwärtsverfahren erreicht. Der Beweis der ersten Implikation in Beweisschritt 28 erfordert ein Zusammenwirken des Reduktions-, All-, Widerspruchsund Vorwärtsverfahrens.

Da dar Satz, der bewiesen werden soll, eine Allaussage ist, ruft das Beweisverfahren das Allverfahren auf. Es führt die Annahme in Beweisschritt 1 ein, daß die Prämisse des Satzes gilt. Dann ruft es das Beweisverfahren auf, die Konklusion des Satzes zu beweisen, die eine Existenzaussage ist. Da diese Existenzaussage besagt, daß eine geschlossene Formeln mit einer bestimmten Eigenschaft existiert, ruft das Existenzverfahren das Kompositionsverfahren auf, das 24 geschlossene Formeln aufgrund der folgenden sieben Regeln konstruiert:

**Regel 14** Ein formale Zahlentheorie enthält eine Variable x. Formalisierung:

$$alle\ T(formale\text{-}Zahlentheorie(T) \rightarrow Variable(x, T))$$

**Regel 15** Ein formale Zahlentheorie enthält eine Variable y. Formalisierung:

$$alle\ T(formale\text{-}Zahlentheorie(T) \rightarrow Variable(y, T))$$

**Regel 16** Ein formale Zahlentheorie enthält eine Formel A(x, y) (vgl. Lemma 9). Formalisierung:

$$alle\ T\ (formale\text{-}Zahlentheorie(T) \rightarrow Formel(A(x,y), T))$$

**Regel 17** Ist $F$ eine Formel einer formalen Zahlentheorie, dann ist auch $\neg F$ eine Formel. Formalisierung:

$$alle\ T, F(formale\text{-}Zahlentheorie(T) \wedge Formel(F,\ T) \rightarrow Formel(\neg F,\ T))$$

**Regel 18** Ist $F$ eine Formel und $x$ eine Variable, dann ist $\forall x F$ eine Formel. Formalisierung:

$$alle\ T, x, F\ (formale\text{ -}Zahlentheorie\ (T) \wedge Variable(x, T) \wedge Formel(F, T) \rightarrow Formel(\forall x F, T))$$

**Regel 19** Die Gödelzahl einer Formel ist eine natürliche Zahl. Formalisierung:

$$alle\ T, F(formale\text{-}Zahlentheorie(T) \wedge Formel(F, T) \rightarrow natürliche\text{ -}Zahl\ (Gz(F)))$$

**Regel 20** Ist $F$ eine Formel, $x$ eine Variable und $n$ eine natürliche Zahl, dann ist $sub(F, x, num(n))$ eine Formel. Formalisierung:

Tabelle 4:

| Die Konstruktion der geschlossenen Formel in Beweisschritt 3 in Tabelle 2 | | |
|---|---|---|
| 1. | *Annahme: formale-Zahlentheorie*($T$) | Allverfahren |
| 2. | *Variable*(x$, T$) | Kompositionsverfahren: R. 14; 1 |
| 3. | *Variable*(y$, T$) | Kompositionsverfahren: R. 15; 1 |
| 4. | *Formel*(A(x, y)$, T$) | Kompositionsverfahren: R. 16; 1 |
| 5. | *Formel*($\neg$A(x,y)$, T$) | Kompositionsverfahren: R. 17; 1, 4 |
| 6. | *Formel*($\forall$y$\neg$A(x,y)$, T$) | Kompositionsverfahren: R. 18; 1, 3, 5 |
| 7. | *natürliche-Zahl*($Gz(\forall$y$\neg$A(x,y))) | Kompositionsverfahren: R. 19; 1, 6 |
| 8. | *Formel*($sub(\forall$y$\neg$A(x, y), x, $Gz(\forall$y$\neg$A(x,y)))$, T$) | Kompositionsverfahren: R. 20; 1, 2, 6, 7 |

$$alle\ T,\ F(\textit{formale-Zahlentheorie}(T) \wedge \textit{Formel}(F,T) \wedge \textit{Variable}(x,T) \wedge \textit{natürliche-Zahl}(n) \rightarrow$$

$$\textit{Formel}(\textit{sub}(F,\ x,\ \textit{num}(n)),\ T)$$

Tabelle 4 zeigt die Konstruktion der geschlossenen Formel im dritten Beweisschritt in Tabelle 3 aufgrund dieser Regeln. Die Schritte 2, 3 und 4 ergeben sich durch Anwendung der Regeln 14, 15 und 16 auf den ersten Beweisschritt in Tabelle 3. Die Formel in Schritt 8 wird dann durch Anwendung der Regeln 17, 18 19 und 20 erzeugt. Aus dieser Formel entsteht dann die Formel im dritten Beweisschritt in Tabelle 3 dadurch, daß der Name $k$ für die Gödelzahl der Formel $\forall y\neg A(x,\ y)$ im zweiten Beweisschritt in Tabelle 3 eingeführt wird und die Funktion $sub$ in der Formel in Schritt 8 in Tabelle 4 ausgeführt wird, d. h. die Variable x in der Formel $\forall y\neg A(x,y)$ durch das Zahlzeichen **k** für die natürliche Zahl $k$ ersetzt wird. Das Existenzverfahren verarbeitet zuerst vier kurze Formeln aus den 24 Formeln, die vom Kompositionsverfahren erzeugt wurden. Zu diesen kurzen Formeln gehört die Formel in Schritt 3 in Tabelle 3. Das Existenzverfahren ersetzt die Variable $F$ im Skopus der Existenzaussage in Gödels Satz nacheinander durch eine der vier Formeln und ruft das Beweisverfahren auf, den die sich ergebenden Instanzen des Skopus innerhalb einer Zeitgrenze zu beweisen, die am Anfang eine Minute beträgt und die verdoppelt wird, falls das Beweisverfahren für alle Formeln versagt. Dieses Versagen wiederholt sich viele Male bis die Zeitgrenze 128 Minuten beträgt und die Formel in Schritt 3 in Tabelle 3 verarbeitet wird. Um die erste Implikation im Skopus der Existenzaussage zu beweisen, erzeugt das Implikationsverfahren die Annahme in Beweisschritt 4, daß die Prämisse der Implikation gilt. Dann ruft es das Beweisverfahren auf, die Konklusion

$$\textit{nicht}(\textit{beweisbar}(\forall y\neg A(\textit{num}(k),y),\ T)) \tag{13}$$

zu beweisen. Da (13) eine Negation ist, ruft das Beweisverfahren das Negationsverfahren auf. Das Negationsverfahren ruft zuerst das Reduktionsverfahren innerhalb einer Zeitgrenze auf. Da das Reduktionsverfahren versagt, ruft das Negationsverfahren das Widerspruchsverfahren auf. Zuerst erzeugt es Beweisschritt 5, indem es Definition 5 auf den Teilbeweis anwendet. Danach erzeugt es die Annahme in Beweisschritt 6, daß die Aussage $\textit{beweisbar}$ ($\forall y\neg A(\textit{num}(k),\ y),T$) gilt, deren Negation (13) bewiesen werden soll. Dann ruft es das Vorwärtsverfahren auf, das die Beweisschritte 7-13 erzeugt, indem es Definitionen, Lemmas und Allaussagen im Teilbeweis auf vorherige Beweisschritte anwendet. Da die Beweisschritte 12 und 13 einen Widerspruch bedeuten, erzeugt das Widerspruchsverfahren den Beweisschritt 14, der die Negation (13) der Annahme in Beweisschritt 6 enthält. Schließlich erzeugt das Implikationsverfahren aus den Beweisschritten 4 und 14 die Implikation in Beweisschritt 15. Damit ist gezeigt, daß die Formel in Schritt 3 nicht beweisbar ist, falls die Theorie konsistent ist.

Der Beweis der zweiten Implikation erfordert ein Zusammenwirken des Reduktions-, All-, Widerspruchs- und Vorwärtsverfahrens. Das Implikationsverfahren erzeugt die Annahme in Beweisschritt 16, daß die Prämisse der Implikation gilt, und ruft das Beweisverfahren auf, die Konklusion

$$\textit{nicht}(\textit{beweisbar}(\neg\forall y\neg A\ (\textit{num}(k),\ y),T)) \tag{14}$$

zu beweisen. Da (14) eine Negation ist, ruft das Negatoinsverfahren das Reduktionsverfahren innerhalb einer Zeitgrenze auf. Es führt das Ziel, die Negation (14) zu beweisen, auf das Teilziel zurück, die Allaussage

$$alle\ n(\textit{natürliche-Zahl}(n) \rightarrow \textit{beweisbar}(\neg A(\textit{num}(k),\ \textit{num}(n)),T)) \tag{15}$$

zu beweisen: Die Unifikation der Folgerung $\textit{nicht}(\textit{beweisbar}(\neg\forall x F,\ T))$ in Definition 2 mit der Negation (14) liefert die Substitution $T/T$, $y/x$ und $\neg A(\textit{num}(k),\ y)/F$. Die Anwendung dieser Substitution auf die Prämisse

$$alle\ n(\textit{natürliche-Zahl}(n) \rightarrow \textit{beweisbar}(\textit{sub}(F,\ x,\ \textit{num}(n)),T)) \tag{16}$$

in Definition 2 ergibt die Allaussage (15). Um (15) zu beweisen, führt das Allverfahren die Annahme in Schritt 17 ein, daß die Prämisse von (15) gilt. Mit Hilfe der Implikation

$$nicht(A(k,n)) \rightarrow beweisbar(\neg A(num(k),num(n)),T) \qquad (17)$$

in Lemma 9 führt das Reduktionsverfahren das Ziel, die Folgerung

$$beweisbar(\neg A(num(k), num(n)),T) \qquad (18)$$

der Allaussage (15) zu beweisen, auf das Teilziel zurück, die Negation *nicht*(*A*(*k,n*)) zu beweisen. Das Negationsverfahren ruft das Reduktionsverfahren innerhalb einer Zeitgrenze auf. Das das Reduktionsverfahren versagt, ruft das Negationsverfahren das Widerspruchsverfahren auf, das die Beweisschritte 18 und 19 durch Anwendung von Lemma 11 erzeugt. Dann erzeugt es die Annahme in Schritt 20, daß die Aussage A(*k, n*) gilt, und ruft das Vorwärtsverfahren auf, das die Schritte 21-23 erzeugt, indem es Definition 8 und Lemma 10 anwendet. Da die Schritte 19 und 23 einen Widerspruch ergeben, erzeugt das Widerspruchsverfahren Schritt 24, der die Negation *nicht*(*A*(*k,n*)) der Annahme *A* (*k, n*) in Schritt 20 enthält. Nun ergibt die Anwendung der Implikation (17) in Lemma 9 auf diese Negation den Schritt 25. Dann erzeugt das Allverfahren die Aussage (15) in Schritt 26 aus den Schritten 17 und 25. Die Anwendung der Definition 6 auf die Schritte 16 und 26 ergibt die Aussage (14) in Schritt 27. Die Implikationsheuristik erzeugt Schritt 28 aus den Schritten 16 und 27. Damit ist gezeigt, daß die Negation der Formel in Schritt 3 nicht beweisbar ist, falls die Theorie ω-konsistent ist. Die Schritte 3, 15 und 28 ergeben nun die Existenzaussage in Schritt 29. Schließlich erzeugt das Allverfahren Gödels Satz in Schritt 30 aus den Schritten 1 und 29.

Gewöhnlich verwenden Beweise von Gödels Satz Cantors Diagonalverfahren, um die unentscheidbare Formel $\forall y \neg A(\mathbf{k},y)$, wobei *k* die Gödelzahl der Formel $\forall y \neg A(x,y)$ ist, zu konstruieren (vgl. Kleene, 1952, S. 6, 205, 207). Im Beweis in Tabelle 3 wird die unentscheidbare Formel durch das Kompositionsverfahren erzeugt, das die Regeln 14-20 anwendet. Dies bedeutet, daß das Computersystem beim Beweis von Gödels Satz implizit Cantors berühmtes Diagonalverfahren wiederentdeckt. Somit zeigt das Beispiel insgesamt, daß adaptive Computersysteme in der Lage sind, die herausragende Leistungen verschiedener Generationen von Mathematikern und epochale Entdeckungen in einem einzigen Schritt hervorzubringen.

Das dritte Beispiel einer Anwendung eines adaptiven Computersystems ist ein automatischer Beweis von Heines Satz. Dieser Beweis ist erheblich komplexer als die vorangehenden Beweise. Heines Satz besagt, daß jede stetige Funktion auf einer kompakten Menge reeller Zahlen gleichmäßig stetig ist (vgl. Apostol, T. M., *Mathematical Analysis*, Reading, Mass.: Addison-Wesley, 1957, S. 75). Bledsoe gibt eine Liste von bedeutenden Lehrsätzen der höheren Mathematik an, die Heines Satz enthält und deren automatischer Beweis weit außerhalb der Leistungsgrenzen herkömmlicher Theorembeweiser liegt (Bledsoe, W. W., Non-resolution theorem proving, *Artificial Intelligence*, Vol. 9, 1977, S. 27). Dies gilt auch noch im Jahr 1992, d. h. 15 Jahre nach der Veröffentlichung dieser Liste. Heines Satz erfordert vier Definitionen.

**Definition 21** Eine Familie *C* von Mengen heißt *offene Überdeckung* einer Menge *S* reeller Zahlen, wenn $S \subseteq \cup_{A \in C}$ *A* gilt und alle Mengen $A \in C$ offen sind, d. h. für alle $a \in A$ gibt es ein $r > 0$ so daß alle reellen Zahlen *x* mit |*a* - *x*| < *r* in *A* enthalten sind. Formalisierung:

$$\forall C, S(\textit{Familie-von-Mengen}(C, \mathrm{R}) \wedge S \subseteq \mathrm{R} \rightarrow (\textit{offene- Überdeckung}(C, S) \leftrightarrow$$

$$S \subseteq \cup_{T \in C} T \wedge \forall T(T \in C \rightarrow \textit{offen}(T))))$$

**Definition 22** Eine Menge *S* reeller Zahlen heißt *kompakt*, wenn jede offene Überdeckung von *S* eine Teilfamilie enthält, die *S* ebenfalls überdeckt. Formalisierung:

$$\forall S(S \subseteq \mathrm{R} \rightarrow (\textit{kompakt}(S) \leftrightarrow$$

$$\forall C(\textit{Familie-von-Mengen } (C, \mathrm{R}) \wedge \textit{offene-Überdeckung}(C, S) \rightarrow$$

$$\exists D(D \subseteq C \wedge \textit{endlich}(D) \wedge S \subseteq \cup_{A \in D} A))))$$

**Definition 23** Eine Funktion *f* auf einer Menge *S* reeller Zahlen mit Funktionswerten in den reellen Zahlen heißt *stetig,* wenn gilt: Für alle $a \in S$ und $\varepsilon > 0$ gibt es ein $\delta > 0$, so daß |*f*(*a*) - *f*(*x*)| < ε für alle $x \in S$ mit |*a* - *x*| < δ gilt. Formalisierung:

$$\forall S, f(S \subseteq R \land Funktion(f,S,R) \to (stetig(f,S) \leftrightarrow$$

$$\forall a, \varepsilon(a \in S \land \varepsilon \in R \land 0 < \varepsilon \to$$

$$\exists \delta(\delta \in R \land 0 < \delta \land \forall x(x \in S \land |a - x| < \delta \to |f(a) - f(x)| < \varepsilon)))))$$

**Definition 24** Eine Funktion $f$ auf einer Menge $S$ reeller Zahlen mit Funktionswerten in den reellen Zahlen heißt *gleichmäßig stetig,* wenn gilt: Für alle $\varepsilon > 0$ gibt es ein $\delta > 0$, so daß $|f(x) - f(y)| < \varepsilon$ für alle $x \in S$ und $y \in S$ mit $|x - y| < \delta$ gilt. Formalisierung:

$$\forall S, f(S \subseteq R \land Funktion(f,S,R) \to (gleichmäßig\text{-}stetig(f,S) \leftrightarrow$$

$$\forall \varepsilon(\varepsilon \in R \land 0 < \varepsilon \to$$

$$\exists \delta(\delta \in R \land 0 < \delta \land \forall x, y(x \in S \land y \in S \land |x - y| < \delta - |f(x) - f(y)| < \varepsilon)))))$$

**Satz 25 (Heine)** Jede stetige Funktion auf einer kompakten Menge reeller Zahlen ist gleichmäßig stetig. Formalisierung:

$$\forall S, f(S \subseteq R \land kompakt(S) \land Funktion(f, S, R) \land stetig(f,S) \to gleichmäßig\text{-}stetig(f, S))$$

Das Computersystem benötigte etwa acht Stunden, um einen Beweis von Heines Satz auf einem einfachen Personalcomputer zu erzeugen. Er enthält etwa 120 Beweisschritte. Zuerst wird der Beweis in gewöhnlicher Darstellung angegeben. Dann wird beschrieben, wie er vom Computersystem erzeugt wird.

Der Beweis in gewöhnlicher Darstellung ist: Wir nehmen an, daß $f$ eine stetige Funktion auf einer kompakten Menge $S$ reeller Zahlen ist. Die Definition 23 der stetigen Funktionen ergibt, daß es für alle $a \in S$ und $\varepsilon > 0$ ein $\delta > 0$ gibt, so daß $|f(a) - f(x)| < \varepsilon$ für alle $x \in S$ mit $|a - x| < \delta$ gilt. Dies bedeutet, daß es eine Funktion $g$ auf $S$ und den positiven reellen Zahlen gibt, so daß

$$|f(a) - f(x)| < \varepsilon \tag{19}$$

für alle $a \in S$, $x \in S$ und $\varepsilon > 0$ mit $|a - x| < g(a, \varepsilon)$ gilt. Sei $\varepsilon > 0$. Wir definieren eine Funktion $h$ auf $S$ durch

$$h(a) = \frac{g(a, \varepsilon/2)}{2}, \tag{20}$$

wobei $a \in S$. Für alle $a \in S$ definieren wir weiterhin Mengen

$$N(a) = \{x : |a - x| < h(a)\} \tag{21}$$

reeller Zahlen. Somit ist $N(a)$ die Menge aller reellen Zahlen, deren "Entfernung" von $a$ kleiner als $h(a)$ ist. Die Mengen $N(a)$, wobei $a \in S$, bilden eine offene Überdeckung von $S$, da für alle $a \in S$ $a$ in $N(a)$ enthalten und $N(a)$ offen ist. Da $S$ kompakt ist, impliziert dies, daß es eine endliche Teilmenge $T$ von $S$ gibt, so daß

$$S \subseteq \bigcup_{a \in T} N(a) \tag{22}$$

gilt. Wir definieren

$$\delta = \min_{a \in T} h(a). \tag{23}$$

Wir nehmen nun an, daß für $x \in S$ und $y \in S$ die Ungleichung

$$|x - y| < \delta \tag{24}$$

gilt, um

$$|f(x) - f(y)| < \varepsilon \tag{25}$$

zu beweisen. Wegen (22) gibt es ein Element $a \in T$, so daß $x \in N(a)$ gilt. Wegen (21) erhalten wir

$$|a - x| < h(a). \tag{26}$$

Wegen (20) bedeutet dies, daß $|a - x| < g(a,\varepsilon/2)$ gilt, was gemäß (19) die Ungleichung

$$|f(a) - f(x)| < \frac{\varepsilon}{2} \tag{27}$$

impliziert. Wegen (23) und (24) erhalten wir

$$|x - y| < h(a). \tag{28}$$

Die Anwendung der Dreiecksungleichung auf (26) und (28) ergibt

$$|a - y| \le |a - x| + |x - y| < h(a) + h(a) = g(a,\varepsilon/2) \tag{29}$$

wegen (20). Aus (29) erhalten wir

$$|f(a) - f(y)| < \frac{\varepsilon}{2}. \tag{30}$$

wegen (19). Die Anwendung der Dreiecksungleichung auf (27) und (30) ergibt

$$|f(x) - f(y)| \le |f(x) - f(a)| + |f(a) - f(y)| < \varepsilon. \tag{31}$$

Damit ist der Beweis von (25) abgeschlossen. Es folgt, daß die Funktion $f$ gleichmäßig stetig ist.

Die Tabellen 5, 6 und 7 enthalten den vom Computersystem erzeugten Beweis von Heines Satz. Der Beweis entspricht dem oben angegebenen Beweis in gewöhnlicher Darstellung. Die Beweisschritte 22, 25, 27, 33, 37, 40, 52 und 58-61 in den Tabellen 5 und 6 erfordern drei weitere Definitionen und sechs Lemmas.

**Definition 26** Eine Menge $A$ ist eine *Teilmenge* einer Menge $B$, wenn alle Elemente, die in $A$ enthalten sind, auch in $B$ enthalten sind. Formalisierung: $\forall A, B(A \subseteq B \leftrightarrow \forall x(x \in A \rightarrow x \in B))$

**Definition 27** Sei $f$ eine Funktion auf einer Menge $A$. Ein Element $x$ ist genau dann in der Bildmenge $f(A)$ enthalten, wenn es ein Element $a \in A$ gibt, so daß $f(a) = x$ gilt. Formalisierung:

$$\forall A, f, x(x \in f(A) \leftrightarrow \exists a(a \in A \wedge f(a) = x))$$

**Definition 28** Sei $(A_i)_{i \in I}$ eine indizierte Familie von Mengen. Dann ist $\cup_{i \in I} A_i$ die Menge aller $x$ mit $x \in A_i$ für wenigstens ein $i \in I$. Formalisierung:

$$\forall x, I, A(x \in \cup_{i \in I} A_i \leftrightarrow \exists i(i \in I \wedge x \in A_i))$$

**Lemma 29** Die Zahl 2 ist eine natürliche Zahl. Formalisierung: $2 \in \mathbf{N}$.

**Lemma 30** Ein Bruchteil einer reellen Zahl ist eine reelle Zahl. Formalisierung:

$$\forall x, n(x \in \mathbf{R} \wedge n \in \mathbf{N} \rightarrow x/n \in \mathbf{R})$$

**Lemma 31** Ein Bruchteil einer positiven reellen Zahl ist positiv. Formalisierung:

$$\forall x, n(x \in \mathbf{R} \wedge 0 < x \wedge n \in \mathbf{N} \rightarrow 0 < x/n)$$

**Lemma 32** Der absolute Wert der Differenz von zwei reellen Zahlen $x$ und $y$ ist gleich dem absoluten Wert der Differenz von $y$ und $x$. Formalisierung:

$$\forall x, y(x \in \mathbf{R} \wedge y \in \mathbf{R} \rightarrow |x - y| = |y - x|)$$

**Lemma 33** Eine endliche Teilmenge des Bildes einer Funktion ist das Bild einer endlichen Teilmenge ihres Definitionsbereichs. Formalisierung:

$$\forall f, A, S(A \subseteq f(S) \wedge endlich(A) \rightarrow \exists T(T \subseteq S \wedge endlich(T) \wedge A = f(T)))$$

**Lemma 34** Die Menge aller reellen Zahlen, deren Abstand von einer vorgegebenen Zahl kleiner als eine vorgegebene positive Zahl ist, ist offen. Formalisierung:

$$\forall a, p(a \in \mathbf{R} \wedge p \in \mathbf{R} \wedge 0 < p \rightarrow offen(\{x : x \in \mathbf{R} \wedge |x - a| < p\}))$$

Der Beweis in den Tabellen 5, 6 und 7 wurde vom Computersystem wie folgt erzeugt: Da Heines Satz eine Allaussage ist, führt das Allverfahren die Annahme in Schritt 1 in Tabelle 5 ein, daß seine Prämisse gilt, d. h. $f$ eine stetige Funktion auf einer kompakten Menge $S$ ist, und erzeugt das Teilziel, zu beweisen, daß $f$ gleichmäßig stetig ist. Mit Hilfe der Definition der gleichmäßig stetigen Funktionen führt das Reduktionsverfahren dieses Teilziel auf das Teilziel zurück, zu beweisen, daß

$$\exists \delta(\delta \in \mathbf{R} \wedge 0 < \delta \wedge$$

$$\forall x, y(x \in S \wedge y \in S \wedge |x - y| < \delta \rightarrow |f(x) - f(y)| < \varepsilon)) \tag{32}$$

Tabelle 5:

| Der erste Teil eines maschinellen Beweises von Heines Satz | | |
|---|---|---|
| 1. | *Annahme:* $S \subseteq \mathbf{R} \wedge kompakt(S) \wedge$ $Funktion(f, S, \mathbf{R}) \wedge stetig(f, S)$ | Allverfahren |
| 2. | *Annahme:* $\varepsilon \in \mathbf{R} \wedge 0 < \varepsilon$ | Allverfahren |
| 3. | $\forall C(Familie\text{-}von\text{-}Mengen(C, \mathbf{R}) \wedge$ $offene\text{-}\ddot{U}berdeckung(C, S) \rightarrow$ $\exists D(D \subseteq C \wedge endlich(D) \wedge S \subseteq \cup_{A \in D} A))$ | Begriffsverfahren: D. 22; 1 |
| 4. | $\forall a, \varepsilon(a \in S \wedge \varepsilon \in \mathbf{R} \wedge 0 < \varepsilon \rightarrow \exists \delta(\delta \in \mathbf{R} \wedge 0 < \delta \wedge$ $\forall x(x \in S \wedge |a - x| < \delta \rightarrow |f(a) - f(x)| < \varepsilon)))$ | Begriffsverfahren: D. 23; 1 |
| 5. | $\exists g(Funktion(g) \wedge \forall a, \varepsilon(a \in S \wedge \varepsilon \in \mathbf{R} \wedge 0 < \varepsilon \rightarrow$ $g(a, \varepsilon) \in \mathbf{R} \wedge 0 < g(a, \varepsilon) \wedge$ $\forall x(x \in S \wedge |a - x| < g(a, \varepsilon) \rightarrow |f(a) - f(x)| < \varepsilon)))$ | Skolemverfahren: 4 |

Tabelle 5: (fortgesetzt)

| Der erste Teil eines maschinellen Beweises von Heines Satz | | |
|---|---|---|
| 6. | $Funktion(g) \wedge \forall a, \varepsilon (a \in S \wedge \varepsilon \in \mathbf{R} \wedge 0 < \varepsilon \rightarrow$ $g(a,\varepsilon) \in \mathbf{R} \wedge 0 < g(a, \varepsilon) \wedge$ $\forall x(x \in S \wedge |a - x| < g(a, \varepsilon) \rightarrow |f(a) - f(x)| < \varepsilon))$ | Skolemverfahren: 5 |
| 7. | $Funktion(h, S)$ | Mengenverfahren |
| 8. | $\forall a(a \in S \rightarrow h(a) \in \mathbf{R} \wedge 0 < h(a))$ | Mengenverfahren |
| 9. | $Funktion(N, S) \wedge$ $\forall a(a \in S \rightarrow N(a) = \{x : x \in \mathbf{R} \wedge |a - x| < h(a)\})$ | Mengenverfahren |
| 10. | $Familie\text{-}von\text{-}Mengen(N(S), \mathbf{R})$ | Mengenverfahren: 9 |
| 11. | $Annahme: a \in S$ | Allverfahren |
| 12. | $N(a) = \{x : x \in \mathbf{R} \wedge |a - x| < h(a)\}$ | Gleichungsverfahren: 9, 11 |
| 13. | $a \in \mathbf{R}$ | Elementverfahren: 1, 11 |
| 14. | $0 < h(a)$ | Reduktionsverfahren: 8, 11 |
| 15. | $a \in \mathbf{R} \wedge 0 < h(a)$ | Konjunktionsverfahren: 13, 14 |
| 16. | $a \in \mathbf{R} \wedge |0| < h(a)$ | Vereinfachungsverfahren: 15 |
| 17. | $a \in \mathbf{R} \wedge |a - a| < h(a)$ | Vereinfachungsverfahren: 16 |
| 18. | $a \in \{x : x \in \mathbf{R} \wedge |a - x| < h(a)\}$ | Vereinfachungsverfahren: 17 |
| 19. | $a \in N(a)$ | Ersetzungsverfahren: 18, 12 |
| 20. | $a \in S \wedge a \in N(a)$ | Konjunktionsverfahren: 11, 19 |
| 21. | $\exists x(x \in S \wedge a \in N(x))$ | Existenzverfahren: 20 |
| 22. | $a \in \cup_{x \in S} N(x)$ | Reduktionsverfahren: D. 28; 21 |
| 23. | $a \in \cup_{T \in N(S)} T$ | Vereinfachungsverfahren: 22 |
| 24. | $\forall a(a \in S \rightarrow a \in \cup_{T \in N(S)} T)$ | Allverfahren: 11, 23 |
| 25. | $S \subseteq \cup_{T \in N(S)} T$ | Reduktionsverfahren: D. 26; 24 |

Tabelle 6:

| Der zweite Teil eines maschinellen Beweises von Heines Satz | | |
|---|---|---|
| 26. | $Annahme: T \in N(S)$ | Allverfahren |
| 27. | $\exists a(a \in S \wedge T = N(a))$ | Gleichungsverfahren: D. 27; 26 |
| 28. | $a \in S \wedge T = N(a)$ | Gleichungsverfahren: 27 |
| 29. | $N(a) = \{x : x \in \mathbf{R} \wedge |a - x| < h(a)\}$ | Gleichungsverfahren: 9, 28 |
| 30. | $a \in \mathbf{R}$ | Elementverfahren: 1, 28 |
| 31. | $h(a) \in \mathbf{R}$ | Reduktionsverfahren: 8, 28 |
| 32. | $0 < h(a)$ | Reduktionsverfahren: 8, 28 |
| 33. | $offen(\{x : x \in \mathbf{R} \wedge |a - x| < h(a)\})$ | Reduktionsverfahren: L. 34; 30, 31, 32 |
| 34. | $offen(N(a))$ | Ersetzungsverfahren: 33, 29 |
| 35. | $offen(T)$ | Ersetzungsverfahren: 34, 28 |
| 36. | $\forall T(T \in N(S) \rightarrow offen(T))$ | Allverfahren: 26, 35 |
| 37. | $offene\text{-}Überdeckung(N(S), S)$ | Reduktionsverfahren: D. 21; 25, 36 |
| 38. | $\exists D(D \subseteq N(S) \wedge endlich(D) \wedge \subseteq \cup_{A \in D} A)$ | Mengenverfahren: 3, 10, 37 |
| 39. | $D \subseteq N(S) \wedge endlich(D) \wedge S \subseteq \cup_{A \in D} A$ | Mengenverfahren: 38 |
| 40. | $\exists T(T \subseteq S \wedge endlich(T) \wedge D = N(T))$ | Gleichungsverfahren: L. 33; 39 |
| 41. | $T \subseteq S \wedge endlich(T) \wedge D = N(T)$ | Gleichungsverfahren: 40 |
| 42. | $S \subseteq \cup_{A \in N(T)} A$ | Umschreibungsverfahren: 39, 41 |
| 43. | $S \subseteq \cup_{a \in T} N(a)$ | Vereinfachungsverfahren: 42 |
| 44. | $Annahme: a \in T$ | Gleichungsverfahren |
| 45. | $a \in S$ | Elementverfahren: 41, 44 |
| 46. | $N(a) = \{x : x \in \mathbf{R} \wedge |a - x| < h(a)\}$ | Gleichungsverfahren: 9, 45 |
| 47. | $\forall a(a \in T \rightarrow N(a) = \{x : x \in \mathbf{R} \wedge |a - x| < h(a)\})$ | Gleichungsverfahren: 44, 46 |

Tabelle 6:   (fortgesetzt)

| | | | |
|---|---|---|---|
| Der zweite Teil eines maschinellen Beweises von Heines Satz | | | |
| 48. | $S \subseteq \cup_{a \in T} \{x : x \in \mathbf{R} \wedge |a - x| < h(a)\}$ | | Umschreibungsverfahren: 43, 47 |
| 49. | *Annahme:* $\delta \in \mathbf{R} \wedge 0 < \delta$ | | Existenzverfahren |
| 50. | *Annahme:* $x \in S \wedge y \in S \wedge |x - y| < \delta$ | | Allverfahren |
| 51. | $x \in \cup_{a \in T} \{x : x \in \mathbf{R} \wedge |a - x| < h(a)\}$ | | Elementverfahren: 48, 50 |
| 52. | $\exists a (a \in T \wedge x \in \{x : x \in \mathbf{R} \wedge |a - x| < h(a)\})$ | | Reduktionsverfahren: D. 28; 51 |
| 53. | $x \in \mathbf{R} \wedge \exists a(a \in T \wedge |a - x| < h(a))$ | | Vereinfachungsverfahren: 52 |
| 54. | $a \in T \wedge |a - x| < h(a)$ | | Reduktionsverfahren: 53 |
| 55. | $a \in S$ | | Elementverfahren: 41, 54 |
| 56. | $f(a) \in \mathbf{R}$ | | Elementverfahren: 1, 55 |
| 57. | $f(x) \in \mathbf{R}$ | | Elementverfahren: 1, 50 |
| 58. | $|f(a) - f(x)| = |f(x) - f(a)|$ | | Gleichungsverfahren: L. 32; 56, 57 |

Tabelle 7:

| | | |
|---|---|---|
| Der dritte Teil eines maschinellen Beweises von Heines Satz | | |
| 59. | $2 \in \mathbf{N}$ | Suchverfahren: L. 29 |
| 60. | $\varepsilon/2 \in \mathbf{R}$ | Reduktionsverfahren: L. 30; 2, 59 |
| 61. | $0 < \varepsilon/2$ | Reduktionsverfahren: L. 31; 2, 59 |
| 62. | *Annahme:* $h(a) \leq g(a,\varepsilon/2)$ | Existenzverfahren: h |
| 63. | $|a - x| < g(a,\varepsilon/2)$ | Transitivitätsverfahren: 54, 62 |
| 64. | $|f(a) - f(x)| < \varepsilon/2$ | Reduktionsverfahren: 6, 50, 55, 60, 61, 63 |
| 65. | $|f(x) - f(a)| < \varepsilon/2$ | Ersetzungsverfahren: 64, 58 |
| 66. | *Annahme:* $h(a) \leq \dfrac{g(a,\varepsilon/2)}{2}$ | Existenzverfahren: h |
| 67. | $|a - x| < \dfrac{g(a,\varepsilon/2)}{2}$ | Transitivitätsverfahren: 54, 66 |
| 68. | *Annahme:* $\delta \leq \dfrac{g(a,\varepsilon/2)}{2}$ | Existenzverfahren: $\delta$ |
| 69. | $|x - y| < \dfrac{g(a,\varepsilon/2)}{2}$ | Transitivitätsverfahren: 50, 68 |
| 70. | $a \in \mathbf{R}$ | Elementverfahren: 1, 55 |
| 71. | $y \in \mathbf{R}$ | Elementverfahren: 1, 50 |
| 72. | $|a - y| \leq |a - x| + |x - y|$ | Dreiecksverfahren: 70, 71, 53 |
| 73. | $|a - x| + |x - y| < g(a,\varepsilon/2)$ | Dreiecksverfahren: 68, 69 |
| 74. | $|a - y| < g(a,\varepsilon/2)$ | Dreiecksverfahren: 72, 73 |
| 75. | $|f(a) - f(y)| < \varepsilon/2$ | Reduktionsverfahren: 6, 50, 55, 60, 61, 74 |
| 76. | $f(y) \in \mathbf{R}$ | Elementverfahren: 1, 50 |
| 77. | $|f(x) - f(y)| \leq |f(x) - f(a)| + |f(a) - f(y)|$ | Dreiecksverfahren: 57, 76, 56 |
| 78. | $|f(x) - f(a)| + |f(a) - f(y)| < \varepsilon$ | Dreiecksverfahren: 65, 75 |
| 79. | $|f(x) - f(y)| < \varepsilon$ | Dreiecksverfahren: 77, 78 |
| 80. | $\forall x,y (x \in S \wedge y \in S \wedge |x - y| < \delta \rightarrow |f(x) - f(y)| < \varepsilon)$ | Allverfahren: 50, 79 |

Tabelle 7:   (fortgesetzt)

| Der dritte Teil eines maschinellen Beweises von Heines Satz | | |
|---|---|---|
| 81. | $\delta \in \mathbf{R} \wedge 0 < \delta \wedge$ <br> $\forall x,y(x \in S \wedge y \in S \wedge |x - y| < \delta \rightarrow |f(x) - f(y)| < \varepsilon)$ | Konjunktionsverfahren: 49, 80 |
| 82. | $\exists \delta(\delta \in \mathbf{R} \wedge 0 < \delta \wedge$ <br> $\forall x, y(x \in S \wedge y \in S \wedge |x - y| < \delta \rightarrow |f(x) - f(y)| < \varepsilon))$ | Existenzverfahren: 81 |
| 83. | $\forall \varepsilon(\varepsilon \in \mathbf{R} \wedge 0 < \varepsilon \rightarrow$ <br> $\exists \delta(\delta \in \mathbf{R} \wedge 0 < \delta \wedge$ <br> $\forall x,y(x \in S \wedge y \in S \wedge |x - y| < \delta \rightarrow |f(x) - f(y)| < \varepsilon))$ | Allverfahren: 2, 82 |
| 84. | *gleichmäßig-stetig*(*f, S*) | Reduktionsverfahren: D. 24; 83 |
| 85. | $\forall S, f(S \subseteq \mathbf{R} \wedge$ *kompakt*(*S*) $\wedge$ <br> *Funktion*(*f, S*, $\mathbf{R}$) $\wedge$ *stetig*(*f, S*) $\rightarrow$ <br> *gleichmäßig-stetig*(*f, S*)) | Allverfahren: 1, 84 |

für alle $\varepsilon \in \mathbf{R}$ mit $\varepsilon > 0$ gilt (vgl. Definition 24). Um diese Allaussage zu beweisen, führt das Allverfahren die Annahme in Schritt 2 ein, daß $\varepsilon > 0$ für eine reelle Zahle $\varepsilon \in \mathbf{R}$ gilt, und ruft das Beweisverfahren auf, die Existenzaussage (32) zu beweisen. Das Beweisverfahren ruft das Existenzverfahren auf, das ein geeignetes $\delta$ in einem vorherigen Beweisschritt nicht finden kann. Daher ruft das Existenzverfahren das Begriffsverfahren auf, das die Begriffe *kompakt* und *stetig* in Schritt 1 findet, und ihre Definitionen 22 und 23 anwendet. Dies liefert die Schritte 3 und 4. Da die Konklusion $\exists \delta(\delta \in \mathbf{R} \wedge ...)$ in Schritt 4 eine Existenzaussage ist, ruft das Existenzverfahren das Skolemverfahren auf, das den Existenzquantor $\exists \delta$ in Schritt 4 durch eine Funktion $g$ ersetzt. Dies liefert die Schritte 5 und 6. Dann ruft das Begriffsverfahren das Mengenverfahren auf, da die Prämisse in der Allaussage in Schritt 3 ein Familie von Mengen enthält. Um Beispiele solcher Familien zu konstruieren, sucht das Mengenverfahren nach Prädikaten in vorherigen Beweisschritten und findet zum Beispiel das Prädikat $|a - x| < \delta$ in Schritt 4. Es verwendet die Variable $a \in S$ in diesem Prädikat als Index einer Familie von Mengen

$$N(a) = \{x : x \in \mathrm{R} \wedge |a - x| < \delta\}. \tag{33}$$

Da die Variable $\delta$ in (33) frei ist, wird sie durch eine Funktion $h(a)$ auf $S$ ersetzt mit der Eigenschaft, daß $h(a) \in \mathbf{R}$ und $h(a) > 0$ für alle $a \in S$ gelten. Dies liefert die Schritte 7-10 in Tabelle 5. Dann ruft das Mengenverfahren das Beweisverfahren auf, zu beweisen, daß die Familie $N(S)$ von Mengen reeller Zahlen eine offene Überdeckung von S bildet.

Mit Hilfe der Definition 21 der offenen Überdeckungen führt das Reduktionsverfahren das Ziel, die Aussage in Schritt 37 in Tabelle 6 zu beweisen, daß die Familie $N(S)$ eine offene Überdeckung von $S$ bildet, auf das Teilziel zurück, die Aussagen

$$S \subseteq \bigcup_{T \in N(S)} T \tag{34}$$

in Schritt 25 und

$$\forall T(T \in N(S) \rightarrow \textit{offen}(T)) \tag{35}$$

in Schritt 36 zu beweisen. Mit Hilfe der Definition 26 der Teilmengenrelation führt das Reduktionsverfahren das Ziel, (34) zu beweisen, auf das Teilziel zurück, die Aussage

$$\forall a(a \in S \rightarrow a \in \bigcup_{T \in N(S)} T) \tag{36}$$

in Schritt 24 zu beweisen. Zu diesem Zweck führt das Allverfahren die Prämisse $a \in \mathbf{N}$ in (36) als Annahme in Schritt 11 ein, und erzeugt das Teilziel, die Ungleichung

$$a \in \bigcup_{T \in N(S)} T \qquad\qquad (37)$$

in Schritt 23 zu beweisen. Das Vereinfachungsverfahren führt das Ziel, (37) zu beweisen, auf das Teilziel zurück, die Aussage

$$a \in \bigcup_{x \in S} N(x) \qquad\qquad (38)$$

in Schritt 22 zu beweisen. Mit Hilfe der Definition 28 der Vereinigung von indizierten Familien von Mengen, führt das Reduktionsverfahren das Ziel, (38) zu beweisen, auf das Teilziel zurück, die Konjunktion

$$a \in S \wedge a \in N(a) \qquad\qquad (39)$$

in Schritt 20 zu beweisen. Das Konjunktionsverfahren führt das Ziel, (39) zu beweisen, auf die Teilziele zurück, die Aussagen $a \in S$ und

$$a \in N(a) \qquad\qquad (40)$$

zu beweisen. Für den Beweis der Aussage $a \in S$ ruft das Beweisverfahren das Suchverfahren auf, das diese Aussage in Schritt 11 findet. Für den Beweis der Aussage (40) versagen das Such- und das Reduktionsverfahren. Das Ersetzungsverfahren ruft daher das Gleichungsverfahren auf, zum Beispiel eine Gleichung $N(a) = t$ mit der freien Variable $t$ zu beweisen, d. h. eine Menge $t$ zu konstruieren, die gleich der Menge $N(a)$ ist. Das Gleichungsverfahren beweist die Gleichung

$$N(a) = \{x : x \in \mathrm{R} \wedge |a - x| < h(a)\} \qquad\qquad (41)$$

in Schritt 12 mit Hilfe der Allaussage in Schritt 9 und der Aussage $a \in S$ in Schritt 11. Mit Hilfe der Gleichung (41) führt das Ersetzungsverfahren das Ziel, (40) zu beweisen, auf das Teilziel zurück, die Aussage

$$a \in \{x : x \in \mathrm{R} \wedge |a - x| < h(a)\} \qquad\qquad (42)$$

in Schritt 18 zu beweisen. Das Vereinfachungsverfahren führt das Ziel, (42) zu beweisen, in drei Schritten auf das Ziel zurück, die Aussage

$$a \in \mathrm{R} \wedge 0 < h(a) \qquad\qquad (43)$$

in Schritt 15 zu beweisen (vgl. Schritte 15-18 in Tabelle 5). Die erste Aussage $a \in \mathbf{R}$ in (43) wird durch das Elementverfahren in Schritt 13 bewiesen und die zweite Aussage $0 < h(a)$ in (43) durch das Reduktionsverfahren in Schritt 14. Damit ist der Beweis der Aussage (34) in Schritt 25 abgeschlossen.

Für den Beweis der Allaussage (35) in Schritt 36 führt das Allverfahren die Annahme $T \in N(S)$ in Schritt 26 ein und ruft das Beweisverfahren auf, die Konklusion

$$offen(T) \qquad\qquad (44)$$

in Schritt 35 zu beweisen. Da es dem Reduktionsverfahren nicht gelingt, (44) zu beweisen, ruft das Ersetzungverfahren das Gleichungsverfahren auf, zum Beispiel eine Gleichung der Form $T = U$ mit einer freien Variable $U$ zu beweisen, d. h. eine Menge $U$ zu konstruieren, die gleich der Menge $T$ ist. Dies ergibt die Schritte 27 und 28. Mit der Gleichung $T = N(S)$ führt das Ersetzungsverfahren das Ziel, (44) zu beweisen, auf das Teilziel zurück, die Aussage

$$offen(N(a)) \tag{45}$$

in Schritt 34 zu beweisen. Da das Reduktionsverfahren beim Beweis von (45) versagt, ruft das Ersetzungsverfahren das Gleichungsverfahren auf, das die Gleichung in Schritt 29 erzeugt. Mit dieser Gleichung führt das Ersetzungsverfahren das Ziel, (45) zu beweisen, auf das Teilziel zurück, die Aussage

$$offen(\{x : x \in \mathrm{R} \wedge |a - x| < h(a)\}) \tag{46}$$

in Schritt 33 zu beweisen. Mit Hilfe des Lemmas 34 führt das Reduktionsverfahren das Ziel, (46) zu beweisen, auf die Teilziele zurück, die Aussagen $a \in \mathbf{R}$, $h(a) \, \varepsilon \, \mathbf{R}$ und $0 < h(a)$ zu beweisen. Diese Teilziele werden durch das Element- und das Reduktionsverfahren in den Schritten 30, 31 und 32 erreicht. Damit ist der Beweis der Aussage (35) in Schritt 36 abgeschlossen. Das Reduktionsverfahren erzeugt nun mit Hilfe der Definition 21 der offenen Überdeckungen die Aussage in Schritt 37, daß die Familie $N(S)$ von Mengen reeller Zahlen eine offene Überdeckung der Menge $S$ bildet.

Das Mengenverfahren erzeugt nun Schritt 38, indem es die Allaussage in Schritt 3 auf die Schritte 10 und 37 anwendet. Schritt 39 ergibt sich aus Schritt 38 gemäß der Inferenzregel der $\exists$-Elimination. Das Mengenverfahren ruft dann das Umschreibungsverfahren auf, das die Aussage $S \subseteq \cup_{A \in D} A$ in Schritt 39 in eine explizitere Form transformiert. Es sucht nach Termen in dieser Aussage, findet zum Beispiel $D$ und ruft das Gleichungsverfahren auf, Gleichungen zu beweisen, deren linke Seite gleich einem solchen Term ist und deren rechte Seite konstruiert werden soll. Auf diese Weise erzeugt das Gleichungsverfahren Schritt 40, der die Gleichung $D = N(T)$ enthält. Aus Schritt 40 ergibt sich Schritt 41 gemäß der Inferenzregel der $\exists$-Elimination. Das Ersetzungsverfahren verwendet die Gleichnug $D = N(T)$ in Schritt 41, um aus der Teilmengenrelation $S \subseteq \cup_{A \in D} A$ in Schritt 39 die Teilmengenrelation $S \subseteq \cup_{A \in N(T)} A$ in Schritt 42 zu erzeugen. Das Vereinfachungsverfahren liefert die Teilmengenrelation

$$S \subseteq \bigcup_{a \in T} N(a) \tag{47}$$

in Schritt 43. Das Ersetzungsverfahren ruft noch einmal das Gleichungsverfahren auf, eine Gleichung zu beweisen, deren linke Seite ein Teilterm von (47) ist und deren rechte Seite konstruiert werden soll. Um eine Gleichung $N(a) = U$ mit einer freien Variablen $U$ zu beweisen, führt das Gleichungsverfahren die Annahme $a \in T$ in Schritt 44 ein, da der Term $N(a)$ in (47) den Index $a \in T$ besitzt. Mit Hilfe der Allaussage in Schritt 9 führt das Gleichungsverfahren das Ziel, eine Gleichung zu beweisen, deren linke Seite $N(a)$ ist, auf das Teilziel zurück, $a \in S$ zu beweisen. Dies wird in Schritt 45 durch das Elementverfahren erreicht. Das Gleichungsverfahren erzeugt nun die Gleichung in Schritt 46, indem es die Allaussage in Schritt 9 auf Schritt 45 anwendet. Die Schritte 44 und 47 ergeben die Allaussage

$$\forall a(a \in T \rightarrow N(a) = \{x : x \in \mathrm{R} \wedge |a - x| < h(a)\}) \tag{48}$$

in Schritt 47, deren Konklusion eine Gleichung ist. Mit dieser Allaussage (48) erzeugt das Umschreibungsverfahren aus der Teilmengenrelation (47) in Schritt 43 die Teilmengenrelation in Schritt 48.

Das Existenzverfahren führt in Schritt 49 in Tabelle 6 ein $\delta \in \mathbf{R}$ mit $\delta > 0$ ein und erzeugt das Teilziel, die Aussage

$$\forall x, y(x \in S \wedge y \in S \wedge |x - y| < \delta \rightarrow |f(x) - f(y)| < \varepsilon) \tag{49}$$

in (32) zu beweisen, um Eigenschaften der Funktion $h$ in den Schritten 7 und 8 und der Zahl $\delta$ in Schritt 49 zu finden. Für den Beweis der Allaussage (49) führt das Allverfahren zwei reelle Zahlen $x \in S$ und $y \in S$ mit $|x - y| < \delta$ in Schritt 50 ein und erzeugt das Teilziel, die Konklusion

$$|f(x) - f(y)| < \varepsilon \tag{50}$$

in (49) zu beweisen. Das Ungleichungsverfahren versucht (50) mit Hilfe des Reduktions-, Transivitätsund der Ersetzungsverfahrens zu beweisen. Da diese Verfahren versagen, ruft es das Dreiecksverfahren auf, das das Teilziel (51) in Tabelle 8 erzeugt, eine Aussage $x \in \mathbf{R}$ mit einer freien Variable $x$ zu beweisen, d. h. eine reelle Zahl $x \in \mathbf{R}$ zu

konstruieren. Tabelle 8 beschreibt, wie dieses Teilziel in fünf Stufen erreicht wird. Jede Stufe enthält ein Verfahren, ein Teilziel, das von diesem Verfahren erzeugt wurde, und einem Ergebniss, das von den folgenden Stufen geliefert wird. Zum Beispiel erzeugt

1. Dreiecksverfahren

$$beweise\ x : x \in \mathbf{R} \tag{51}$$

Ergebnis: $f(a) \in \mathbf{R}$ in Schritt 56

2. Elementverfahren mit $Funktion(f, S, \mathbf{R})$ in Schritt 1

$$beweise\ a : a \in S \tag{52}$$

Ergebnis: $a \in S$ in Schritt 55

3. Elementverfahren mit $T \subseteq S$ in Schritt 41

$$beweise\ a : a \in T \tag{53}$$

Ergebnis: $a \in T$ in den Schritten 52–54

4. Reduktionsverfahren mit Definition 28

$$beweise\ x, A_i : x \in \bigcup_{i \in T} A_i \tag{54}$$

Ergebnis: $x \in \bigcup_{a \in T} \{x : x \in \mathbf{R} \wedge |a - x| < h(a)\}$ in Schritt 51

5. Elementverfahren mit $S \subseteq \bigcup_{a \in T} \{x : x \in \mathbf{R} \wedge |a - x| < h(a)\}$ in Schritt 48

$$beweise\ x : x \in S \tag{55}$$

Ergebnis: $x \in S$ in Schritt 50

Tabelle 8: Die Konstruktion der Zahl $f(a) \in \mathbf{R}$ für das Dreiecksverfahren

das Dreiecksverfahren in der ersten Stufe das Teilziel (51) und die zweite Stufe liefert das Ergebnis $f(a) \in \mathbf{R}$ in Schritt 56. Mit Hilfe der Annahme $Funktion(f, S, \mathbf{R})$ in Schritt 1 in Tabelle 5, daß $f$ eine Funktion auf $S$ in $\mathbf{R}$ ist, führt das Elementverfahren in der zweiten Stufe das Teilziel (51) auf das Teilziel (52) zurück, eine Aussage $a \in S$ mit der freien Variable $S$ zu beweisen, d. h. ein Element $a \in S$ zu konstruieren. Eine weitere Anwendung des Elementverfahrens in der dritten Stufe führt das Teilziel (52) auf das Teilziel (53) zurück, ein Element $a \in T$ zu konstruieren. Nun unifiziert das Reduktionsverfahren die Aussage $a \in T$ in (53) mit der Auusage $i \in I$ in Definition 28 und verwendet die sich ergebenden Substitutionen $a/i$ and $T/I$, um (53) auf das Teilziel (54) zurückzuführen, ein $x$ und eine Familie $A_i$ von Mengen zu konstruieren, so daß $x \in \cup_{i \in T} A_i$ gilt. Schließlich führt das Elementverfahren das Teilziel (54) auf das Teilziel (55) zurück, ein Element $x \in S$ zu konstruieren, das in Schritt 50 in Tabelle 6 enthalten ist. Aus $x \in S$ erzeugen das Element- und das Reduktionsverfahren die reelle Zahl $f(a) \in \mathbf{R}$ und erfüllen somit das Teilziel (51), das vom Dreiecksverfahren erzeugt wurde.

Mit dem Ziel, die Ungleichung (50) in Schritt 79 in Tabelle 7 zu beweisen, verwendet das Dreiecksverfahren die reelle Zahl $f(a) \in \mathbf{R}$, um die Teilziele zu erzeugen, die Ungleichungen

$$|f(x)\text{-}f(a)| < \frac{\varepsilon}{2} \tag{56}$$

und

$$|f(a)\text{-}f(y)| < \frac{\varepsilon}{2} \tag{57}$$

in den Schritten 65 und 75 zu beweisen. Da es weder dem Reduktionsverfahren noch dem Transitivitätsverfahren gelingt, die Aussage (56) in Schritt 65 zu beweisen, ruft das Dreiecksverfahren das Ersetzungsverfahren auf, das zum Beispiel das Teilziel

$$beweise\ t : |f(x) - f(a)| = t \tag{58}$$

erzeugt, eine Aussage $|f(x) - f(a)| = t$ mit einer freien Variable $t$ zu beweisen, d. h. einen Term $t$ zu konstruieren, der gleich dem Term $|f(x) - f(a)|$ in (56) ist. Das Gleichungsverfahren unifiziert den Term $|x - y|$ in Lemma 32 mit dem Term $|f(x) - f(a)|$ in (58) und verwendet die sich ergebenden Substitutionen $f(x)/x$ und $f(a)/y$, um das Teilziel (58) auf das Teilziel zurückzuführen, $f(a) \in \mathbf{R}$ und $f(x) \in \mathbf{R}$ gemäß der Prämisse in Lemma 32 zu beweisen. Die Aussage $f(a)\ \varepsilon\ \mathbf{R}$ ist in Schritt 56 enthalten und die Aussage $f(x) \in \mathbf{R}$ in Schritt 57 wird vom Elementverfahren bewiesen. Somit erzeugt das Gleichungsverfahren die Gleichung

$$|f(x) - f(a)| = |f(a) - f(x)| \tag{59}$$

in Schritt 58, die das Teilziel (58) erfüllt. Nun wird die Kontrolle an das Ersetzungsverfahren zurückgegeben, das (59) verwendet, um das Ziel, (56) zu beweisen, auf das Teilziel zurückzuführen, die Ungleichung

$$|f(a) - f(x)| < \frac{\varepsilon}{2} \tag{60}$$

in Schritt 64 zu beweisen. Das Reduktionsverfahren unifiziert die Ungleichung (60) mit der Ungleichung $|f(a) - f(x)| <$ $\varepsilon$ in Schritt 6 und verwendet die sich ergenden Substitutionen, um das Ziel, (60) zu beweisen, auf die Teilziele zurückzuführen, die Aussagen $\varepsilon/2 \in R$, $0 < \varepsilon/2$ und

$$|a - x| < g(a, \varepsilon/2) \tag{61}$$

in den Schritten 60, 61 und 63 zu beweisen. Das Reduktionsverfahren beweist die Aussagen $\varepsilon/2 \in R$ und $0 < \varepsilon/2$ in den Schritten 60 und 61 mit Hilfe der Lemmas 30 und 31. Schritt 59 benutzt Lemma 29. Da es dem Reduktionsverfahren nicht gelingt, (61) zu beweisen, ruft das Dreiecksverfahren das Transiviätsverfahren auf, das die Ungleichung $|a - x|$ $< h(a)$ in Schritt 54 verwendet, um das Ziel, (61) zu beweisen, auf das Teilziel zurückzuführen, die Ungleichung

$$h(a) \leq g(a, \varepsilon/2) \tag{62}$$

in Schritt 62 zu beweisen. Da (62) die Funktion $h$ enthält, betrachtet das Existenzverfahren (62) als Eigenschaft von $h$ und erzeugt daher die Annahme in Schritt 62. Nun werden das Transitivitäts-, das Reduktions- und das Ersetzungsverfahren auf Schritt 62 angewandt, was die Gleichung (56) in Schritt 65 hervorbringt.

Die zweite Ungleichung (57) wird in den Schritten 66-75 durch das Transitivitäts-, Element-, Dreiecks- und Reduktionsverfahren bewiesen. Dies ergibt eine weitere Eigenschaft von $h$ in Schritt 66 und eine Eigenschaft von $\delta$ in Schritt 68. Dann verwendet das Dreiecksverfahren die Ungleichungen (56) and (60) in den Schritten 65 und 75, um die Ungleichung (50) in Schritt 79 zu beweisen. Schließlich erzeugt das Allverfahren aus den Schritten 50 und 79 die Allaussage (49) in Schritt 80 und gibt dann die Kontrolle an das Existenzverfahren zurück. Das Konjunktionsverfahren erzeugt nun aus den Schritten 49 und 80 die Konjunktion in Schritt 81 und das Existenzverfahren die Existenzaussage (32) in Schritt 82.

Die bisher erzeugten Beweisschritte sind unter der Annahme gültig, daß die Funktion $h$ und die reelle Zahl $\delta$ die Eigenschaften in den Beweisschritten 62, 66 und 68 erfüllen. Nun ruft das Existenzverfahren das Beweisverfahren auf, eine dieser Eigenschaften aus den übrigen abzuleiten. Da die Eigenschaft von $h$ in Schritt 62 aus der Eigenschaft von $h$ in Schritt 66 abgeleitet werden kann, wird die Eigenschaft in Schritt 62 aufgegeben. Dann erzeugt das Existenzverfahren die Definition

$$\forall a(a \in S \rightarrow h(a) = \frac{g(a,\ \varepsilon/2)}{2}) \tag{63}$$

von $h$ aus der Eigenschaft von $h$ in Schritt 66 und der Aussage $a \in S$ in Schritt 55. Außerdem erzeugt es die Definition

$$\delta = \min_{a \in T} \frac{g(a, \epsilon/2)}{2} \tag{64}$$

von $\delta$ aus der Eigenschaft von $\delta$ in Schritt 68 und den Aussagen *endlich*($T$) und $a \in T$ in den Schritten 41 and 54. Es fügt die Definition (63) von $h$ in Schritt 7 in Tabelle 5 ein und ruft das Beweisverfahren auf, die Aussage in Schritt 8 zu beweisen, daß $h(a) \in \mathbf{R}$ und $f(a) > 0$ für alle $a \in S$ gelten. Dann fügt es die Definition (64) von $\delta$ in Schritt 49 in Table 6 ein und ruft das Beweisverfahren auf, die Aussagen $\delta \in \mathbf{R}$ und $\delta > 0$ in diesem Schritt zu beweisen. Schließlich ruft es das Beweisverfahren auf, die Eigenschaften von $h$ und $\delta$ in den Schritten 62, 66 und 68 zu beweisen.

Das Existenzverfahren gibt dann die Kontrolle an das Allverfahren zurück, das aus den Schritten 2 und 82 die Allaussage in Schritt 83 erzeugt. Das Reduktionsverfahren wendet nun die Definition 24 der gleichmäßig stetigen Funktionen auf Schritt 83 an. Dies ergibt Schritt 84. Das Allverfahren erzeugt schließlich Heines Satz in Schritt 85 aus den Schritten 1 und 84.

Die Steuerungs- und Ausführungskomponenten des beschriebenen adaptiven Computersystems sind Verfahren zum Beweis mathematischer Lehrsätze. Beispiele für Steuerungskomponenten sind das Beweisverfahren und das Ungleichungsverfahren. Beispiele für Ausführungskomponenten sind das Suchverfahren und das Kompositionsverfahren. In manchen Steuerungskomponenten ist eine Ausführungskomponente integriert. Zum Beisipel ist im Mengenverfahren eine Ausführungskomponente integriert, die nach Prädikaten sucht, um daraus Mengen zu konstruieren. Das Mengenverfahren ist eine Steuerungskomponente, da es diese Ausführungskomponente und das Kompositionsverfahren steuert. Im beschriebenen Computersystem werden Betriebsmittel oft nach dem Überschreiten einer Zeitgrenze entzogen. Manche Verfahren, zum Beispiel das Suchverfahren, terminieren nach kurzer Zeit. Eine Begrenzung der Betriebsmittel, zum Beispiel durch Zeitgrenzen, ist daher für solche Verfahren nicht erforderlich.

In komplexen Gebieten wie dem des Theorembeweisens ist es schwer vorhersehbar, ob die Anwendung eines Verfahrens zu einer kombinatorischen Explosion führt. Durch die regulierende Auswahl von Verfahren kann sich ein adaptives Computersystem auch an schwer vorhersehbare Situationen anpassen, da es erfolglosen Verfahren, die eine kombinatorische Explosion produzieren, Betriebsmittel entzieht und andere Verfahren aufruft.

Zur Lösung einer Aufgabe ruft das beschriebene Computersystem zuerst häufig einfache Verfahren auf, die wenig Betriebsmittel erfordern. Zum Beispiel ruft das Beweisverfahren zuerst das Suchverfahren auf und das Existenzverfahren prüft zuerst, ob ein Element, dessen Existenz bewiesen werden soll, nicht schon im Teilbeweis vorkommt. Das Computersystem erzeugt einfache Variationen von Verfahren zum Beispiel dadurch, daß es ein Verfahren innerhalb einer Zeitgrenze aufruft und diese Zeitgrenze dann vergrößert. Dadurch entsteht eine einfache Variation des ursprünglich aufgerufenen Verfahrens.

Das Kompositionsverfahren generiert die Menge $S$ in Beweisschritt 3 in Tabelle 1 und die unentscheidbare Formel in Beweischritt 3 in Tabelle 3. Diese Menge $S$ und diese unentscheidbare Formel sind die zentralen Ideen des Beweises von Satz 4 in Tabelle 1 und des Beweises des Gödelschen Unvollständigkeitssatzes 7 in Tabelle 3. Das adaptive Computersystem erzeugte auch einen Beweis des Satzes von Bolzano-Weierstrass, der besagt, daß jede beschränkte unendliche Menge S reeller Zahlen einen Häufungspunkt besitzt (vgl. Apostol, T. M., *Mathematical Analysis,* Reading, Mass.: Addison-Wesley, 1957, S. 43). In diesem Beweis generierte das Kompositionsverfahren das Prädikat $P(x)$, daß die Menge aller $y \in S$ mit $y < x$ endlich ist. Das Supremum der Menge aller reellen Zahlen $x$, die dieses Prädikat $P(x)$ erfüllen, ist ein Häufungspunkt von $S$. Das Prädikat $P(x)$ bildet die zentrale Idee des Beweises des Satzes von Bolzano-Weierstrass. Bledsoe gibt eine Liste von bedeutenden Lehrsätzen der höheren Mathematik an, die den Satz von Bolzano-Weierstrass enthält und deren automatischer Beweis weit außerhalb der Leistungsgrenzen herkömmlicher Theorembeweiser liegt (Bledsoe, W. W., Non-resolution theorem proving, *Artificial Intelligence*, Vol. 9, 1977, S. 27). Dies gilt auch noch im Jahr 1992, d. h. 15 Jahre nach der Veröffentlichung dieser Liste. Die Beweise des Satzes von von Bolzano-Weierstrass, des Satzes von Heine und des Gödelschen Unvollständigkeitssatzes zeigen, daß sogar recht einfache adaptive Computersysteme in der Lage sind, Beweise solcher Lehrsätze automatisch zu generieren.

Das Auswahlverfahren wählt Wissen, d. h. Definitionen und Lemmas, die für den Beweis nützlich sind, aus einer Wissenbasis aus. Zum Beispiel sind dieser Wissenbasis beim Beweis von Heines Satz auch eine Fülle von Axiomen, Definitionen und Lemmas enthalten, die für den Beweis des Satzes von Bolzano-Weierstrass erforderlich sind oder aus Apostols Lehrbuch der Analysis entnommen sind (vgl. Apostol, T. M., *Mathematical Analysis,* Reading, Mass.: Addison-Wesley, 1957, S. 43).

Das beschriebene Computersystem enthält Steuerungskomponenten, die in mehreren Regulationen, die eine zyklischen Struktur besitzen, von einer Steuerungskomponente aktiviert werden können, deren Aktivierung sie selbst veranlaßt haben. Zum Beispiel ruft das Beweisverfahren das All-, das Existenz- und das Konjunktionsverfahren auf und diese Verfahren rufen wiederum das Beweisverfahren auf. Eine solche zyklische Struktur kann auch mehr als zwei Steuerungskomponenten einschließen. Zum Beispiel ruft das Beweisverfahren das Ungleichungsverfahren auf, das Ungleichungsverfahren das Transitivitätsverfahren und das Transitivitätsverfahren wiederum das Beweisverfahren.

**EP 0 571 779 B1**

GEWERBLICHE ANWENDBARKEIT

Anwendungsmöglichkeiten für adaptive Computersysteme bieten sich in Gebieten an, in denen herkömmliche Systeme, die auf starren Komponenten beruhen, versagen oder in ihrer Leistungsfähigkeit begrenzt sind. Adaptive Computersysteme eignen sich insbesondere für komplexe Anwendungen, in denen neue, schwer vorhersehbare Probleme und Situationen bewältigt werden müssen und die daher eine automatische Adaption dieser Systeme erforderlich machen. Beispiele für Anwendungsgebiete sind die Bild- und Sprachverarbeitung und die Robotik.

**Patentansprüche**

1.  Computersystem, das einen Speicher zur Speicherung von Programmen und Wissen umfaßt und das mit Hilfe der Programme und des Wissens Eingabesignale verarbeitet und als endgültiges Ergebnis Ausgabesignale, die Informationen repräsentieren, erzeugt, **dadurch gekennzeichnet,**
    **daß** es mehrere Ausführungskomponenten (2,4,5) und wenigstens eine Steuerungskomponente (1) enthält, die die Ausführungskomponenten (2,4,5) durch Regulationen (3,6) steuert,
    **daß** die Steuerungskomponente (1) in einer Regulation (3,6) einer Ausführungskomponente (2,4,5), die eine Aufgabe nicht löst, Betriebsmittel entzieht und eine andere Ausführungskomponente (2,4,5) aktiviert und
    **daß** es die Ausführungskomponenten (2,4,5), die Eingabesignale verarbeiten und Ausgabesignale erzeugen, durch Regulationen (3,6) selbst auswählt und organisiert.

2.  Ein Computersystem gemäß Anspruch 1, **dadurch gekennzeichnet, daß** es sich durch Regulationen (3,6) an neue und schwer vorhersehbare Situationen anpassen kann.

3.  Ein Computersystem gemäß Anspruch 1, **dadurch gekennzeichnet, daß** es in einer Regulation (3,6) Variationen von Ausführungskomponenten (2,4,5) generiert und diese Ausführungskomponenten (2,4,5) dann aktiviert.

4.  Ein Computersystem gemäß Anspruch 1, **dadurch gekennzeichnet, daß** es in wenigstens einer Regulationen (3,6) zuerst Ausführungskomponenten (2,4,5) aktiviert, die einfach sind oder wenig Betriebsmittel erfordern.

5.  Ein Computersystem gemäß Anspruch 1, **dadurch gekennzeichnet, daß** das es Mittel zur Lösung einer Aufgabe durch Komposition von elementaren Begriffen generiert.

6.  Ein Computersystem gemäß Anspruch 1, **dadurch gekennzeichnet, daß** es wenigstens eine Steuerungskomponente (1) enthält, die das Ziel, eine Aufgabe zu lösen, auf das Teilziel zurückführt, eine oder mehrere andere Aufgaben zu lösen.

7.  Ein Computersystem gemäß Anspruch 1, **dadurch gekennzeichnet, daß** wenigstens eine Steuerungskomponente (1) in einer Regulation (3,6) mehrere Steuerungskomponenten (1) steuert, die in Regulationen (3,6) weitere Steuerungskomponenten (1) oder Ausführungskomponenten (2,4,5) steuern.

8.  Ein Computersystem gemäß Anspruch 1, **dadurch gekennzeichnet, daß** es das für die Lösung einer Aufgabe erforderliche Wissen aus einer Wissensbasis auswählt.

9.  Ein Computersystem gemäß Anspruch 1, **dadurch gekennzeichnet, daß** wenigstens eine Steuerungskomponente (1) in mehreren Regulationen (3,6), die eine zyklischen Struktur besitzen, von einer Steuerungskomponente (1) aktiviert werden kann, deren Aktivierung sie selbst veranlaßt hat.

**Claims**

1.  A computer system having a memory for storing programs and knowledge, by means of the programs and the knowledge processing input signals and, as a final result, generating output signals, wherein the input signals and the output signals represent information, **characterized in that**:

    it comprises several execution components (2,4,5) and at least a control component (1) that controls the execution components (2,4,5) by means of adjustments (3,6),
    the control component (1) in a adjustment (3,6) withdraws resources from an execution component (2,4,5) that cannot solve a problem and activates another execution component (2,4,5), and
it selects and organizes execution components (2,4,5) processing input signals and generating output signals in adjustments (3,6).

2. A computer system according to claim 1 **characterized in that** it can adapt itself to hardly predictable new situations by means of adjustments (3,6).

3. A computer system according to claim 1 **characterized in that** it generates variations of execution components (2,4,5) in an adjustment (3,6) and then activates these execution components (2,4,5).

4. A computer system according to claim 1 **characterized in that**, in at least one adjustment (3,6), it first activates execution components (2,4,5) that are simple or require few resources.

5. A computer system according to claim 1 **characterized in that** it generates methods for solving problems by composing elementary concepts.

6. A computer system according to claim 1 **characterized in that** it comprises at least one control component (1) that reduces the goal to solve a problem to the subgoal to solve one or several other problems.

7. A computer system according to claim 1 **characterized in that** at least one control component (1), in an adjustment (3,6), controls several control components that control further control components (1) or execution components (2,4,5) in adjustments (3,6).

8. A computer system according to claim 1 **characterized in that** it selects the knowledge required for solving a problem from a knowledge base.

9. A computer system according to claim 1 **characterized in that** at least one control component (1) is activated in several adjustments (3,6) having a cyclic structure by another control component (1) whose activation it itself has caused.

**Revendications**

1. Système d'ordinateur qui couvre une mémoire visant le stockage des programmes et du savoir et qui traite des signaux d'entrée à l'aide des programmes et du savoir et produit comme résultat définitif des signaux de sortie, qui représentent des informations, marqué par le fait
qu'il contient plusieurs composantes d'mise en oeuvre (2,4,5) et au moins une composante d'orientation (1), qui oriente les composantes d'mise en oeuvre (2,4,5) par des régularisations (3,6),
que la composante d'orientation (1) dans une régularisation (3,6) extrait à une composante d'mise en oeuvre (2,4,5), qui ne résout pas une tâche, le moyen opérationnel et active une autre composante d'mise en oeuvre (2,4,5), et
que lui-même choisit et organise les composantes d'mise en oeuvre (2,4,5), qui traitent des signaux d'entrée et produisent des signaux de sortie, par des régularisations (3,6).

2. Un système d'ordinateur comme déterminé dans la revendication 1 qui peut s'adapter par des régularisations (3,6) à des situations nouvelles et difficilement prévisibles.

3. Un système d'ordinateur comme déterminé dans la revendication 1 qui produit des variations des composantes d'mise en oeuvre (2,4,5) dans une régularisation (3,6) et active alors ces composantes d'mise en oeuvre (2,4,5).

4. Un système d'ordinateur comme déterminé dans la revendication 1 qui d'abord dans au moins une régularisation (3,6) active les composantes d'mise en oeuvre (2,4,5) qui sont simples ou exigent peu moyen opérationnelle.

5. Un système d'ordinateur comme déterminé dans la revendication 1 qui produit des moyens à la solution d'une tâche par la composition des notions élémentaires.

6. Un système d'ordinateur comme déterminé dans la revendication 1 qui contient au moins une composante d'orientation (1) qui l'objectif de résoudre une tâche réduit à l'objectif partiel de résoudre une ou plusieurs autres tâches.

**7.** Un système d'ordinateur comme déterminé dans la revendication 1 marqué par le fait qu'au moins une composante d'orientation (1) oriente plusieurs composantes d'orientation (1) dans une régularisation (3,6) qui orientent d'autres composantes d'orientation (1) ou composantes d'mise en (2,4,5) oeuvre dans des régularisations (3,6).

**8.** Un système d'ordinateur comme déterminé dans la revendication 1 qui choisit le savoir nécessaire pour la solution d'une tâche d'une base de connaissances.

**9.** Un système d'ordinateur comme déterminé dans la revendication 1 marqué par le fait qu'au moins une composante d'orientation (1) dans plusieurs régularisations (3,6), qui possèdent une structure cyclique, peut être activée par une composante d'orientation (1) dont l'activation elle-même a provoquée.

FIG. 1